(19) Europäisches Patentamt
European Patent Office
Office européen des brevets

(11) EP 3 559 136 B1

(12) FASCICULE DE BREVET EUROPEEN

(45) Date de publication et mention de la délivrance du brevet:
**09.09.2020 Bulletin 2020/37**

(21) Numéro de dépôt: **17828983.1**

(22) Date de dépôt: **20.12.2017**

(51) Int Cl.:
***C09D 195/00*** (2006.01) ***C08K 5/25*** (2006.01)
***C08L 95/00*** (2006.01)

(86) Numéro de dépôt international:
**PCT/FR2017/053720**

(87) Numéro de publication internationale:
**WO 2018/115730 (28.06.2018 Gazette 2018/26)**

(54) **COMPOSITION D'ASPHALTE COULÉ POUR LA RÉALISATION DE REVÊTEMENTS**

GUSSASPHALTZUSAMMENSETZUNG ZUR HERSTELLUNG VON BESCHICHTUNGEN

MASTIC ASPHALT COMPOSITION FOR PRODUCTION OF SURFACINGS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2016 FR 1663115**

(43) Date de publication de la demande:
**30.10.2019 Bulletin 2019/44**

(73) Titulaire: **Total Marketing Services**
**92800 Puteaux (FR)**

(72) Inventeurs:
- **HUNG, Yvong**
**69003 Lyon (FR)**
- **VINCENT, Régis**
**69520 Grigny (FR)**

(74) Mandataire: **Corizzi, Valérie**
**PACT-IP**
**37, rue Royale**
**92210 Saint-Cloud (FR)**

(56) Documents cités:
**CN-A- 101 585 118 FR-A1- 3 024 454**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 559 136 B1

## Description

La présente invention concerne l'utilisation une composition de liant, solide à température ambiante, notamment à température ambiante élevée pour la préparation d'asphalte coulé. Elle concerne les compositions d'asphalte coulé préparées à partir de cette composition de liant et présentant des propriétés améliorées. Elle concerne un procédé de fabrication d'asphalte coulé.

## Etat de la technique antérieure

Un asphalte coulé est classiquement un matériau dense comprenant un liant, généralement de type bitumineux, et des charges minérales constituées de fines, de sable, et de gravillons. La composition en charges minérales de l'asphalte coulé est habituellement choisie de manière à minimiser les vides. En particulier, les asphaltes coulés se distinguent des autres enrobés bitumineux par leur teneur très élevée en liant bitumineux et en fines ou fillers, c'est-à-dire en charges minérales de diamètre inférieur ou égal à 0,063 mm.

L'asphalte coulé est généralement fabriqué par mélange des différentes charges minérales dans le liant porté à l'état liquide par élévation de température, et par malaxage en continu du mélange afin d'obtenir une composition sensiblement homogène. Le mélange est ensuite coulé à chaud et se solidifie au refroidissement. Le revêtement d'asphalte coulé ainsi obtenu est utilisable en l'état et sans compactage complémentaire.

Les asphaltes coulés sont habituellement utilisés dans la construction de routes, notamment le revêtement de chaussées, de sols de parkings ; de voies de circulation pour piétons, telles que des trottoirs ou des terrasses ; d'aménagements urbains, tels que pistes de skateboards ; dans la réalisation de sols d'équipements sportifs ou de sites industriels ; dans la réalisation d'étanchéité de bâtiments ou d'ouvrages de génie civil ; pour des applications techniques spéciales telles que mastics d'enrochement, sols de chambres froides, asphaltes anti-acide intérieurs et extérieurs.

Le liant peut être un liant bitumineux, un liant clair, ou un liant à base de brai, en fonction de l'application finale visée. Le liant bitumineux se présente généralement sous la forme d'un matériau noir fortement visqueux, voire solide à température ambiante, qui se fluidifie en chauffant. Le liant clair se présente sous la forme d'un matériau clair pouvant être coloré par exemple par l'ajout de pigment, qui se fluidifie en chauffant.

Les propriétés mécaniques du revêtement d'asphalte coulé dépendent des pourcentages et de la nature des différents composants : charges minérales et liant. Les trois propriétés fondamentales de l'asphalte coulé que l'on souhaite contrôler sont : la faculté d'être coulé à chaud, l'étanchéité et la résistance à l'usure, en particulier la résistance à l'indentation. De façon additionnelle, on est aussi parfois conduit à évaluer le caractère glissant du revêtement, propriété que l'on cherche à éviter.

Les asphaltes coulés sont principalement réalisés par mélange d'un liant hydrocarboné, tel que notamment une composition bitumineuse, ou un liant clair ou un liant à base de brai, et de charges solides minérales. Les asphaltes de l'art antérieur sont généralement coulés à haute température, soit à une température comprise entre 200 °C et 270 °C environ, plus souvent entre 210 °C et 250 °C. L'utilisation de telles températures pour la préparation d'asphaltes coulés n'est pas dépourvue d'inconvénients, notamment des dégagements de fumées importants, liés à la décomposition du liant, et un coût énergétique élevé pour porter l'ensemble des composants à la température souhaitée.

Plusieurs documents antérieurs décrivent des tentatives pour formuler un asphalte coulé qui puisse être préparé à des températures plus basses, comme par exemple EP 2 276 811. Ce document décrit un asphalte coulé préparé à partir d'une base de bitume et des additifs de réglage de propriétés physico-chimiques, comprenant une cire d'origine animale et un ou plusieurs amides d'éthylène diamine. Le document FR 2 721 936 enseigne d'ajouter au liant une cire d'hydrocarbure, dans une proportion pouvant atteindre 15 % en masse du liant dans le but d'abaisser la température de mise en oeuvre des asphaltes. FR 2 855 523 propose d'ajouter, en plus d'une cire d'hydrocarbure, un second additif, constitué par une cire d'ester d'acide gras ayant un point de fusion inférieur à 85 °C.

La grande majorité du bitume utilisé pour la fabrication d'asphalte coulé se présente généralement sous la forme d'un matériau noir fortement visqueux, voire solide à température ambiante, qui se fluidifie en chauffant.

De manière générale, les différents types de liants, liants bitumineux, liants clairs, liants à base de brai, sont stockés et transportés à chaud, en vrac, dans des camions-citernes ou par bateaux à des températures élevées de l'ordre de 120°C à 160°C. Or, le stockage et le transport de ces liants à chaud présente certains inconvénients. D'une part, le transport de ces liants à chaud sous forme liquide est considéré comme dangereux et il est très encadré d'un point de vue réglementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, la viscosité du liant pourra augmenter durant un trajet trop long. Les distances de livraison du liant sont donc limitées. D'autre part, le maintien du liant à des températures élevées dans les cuves ou dans les camions-citernes consomme de l'énergie. En outre, le maintien du liant à des températures élevées pendant une longue période peut affecter les propriétés du liant et ainsi changer les performances finales de l'enrobé, en particulier de l'asphalte coulé.

Pour pallier les problèmes du transport et du stockage des liants à chaud, des conditionnements permettant le transport et le stockage des liants à température ambiante ont été développés. Ce mode de transport des liants en conditionnement à température ambiante ne représente qu'une fraction minime des quantités transportées dans le monde, mais il correspond à des besoins bien réels pour les régions géographiques d'accès difficile et coûteux par les moyens de transport traditionnels.

A titre d'exemple de conditionnement permettant le transport à froid utilisé actuellement, on peut citer le conditionnement des liants à température ambiante dans des fûts métalliques. Ce moyen est de plus en plus contestable d'un point de vue environnemental car le liant stocké dans les fûts doit être réchauffé avant son utilisation comme liant routier. Or, cette opération est difficile à mettre en œuvre pour ce type de conditionnement et les fûts constituent un déchet après utilisation. D'autre part, le stockage du liant à température ambiante dans des fûts conduit à des pertes car les liants sont très visqueux et une partie du produit reste sur les parois du fût lors du transvasement dans les cuves des unités de production des enrobés. Quant à la manipulation et au transport de produits bitumineux ou de liants clairs dans ces fûts, ils peuvent s'avérer difficiles et dangereux si l'équipement spécialisé de manutention des fûts n'est pas disponible chez les transporteurs ou sur le lieu d'utilisation du bitume ou du liant clair.

A titre d'autres exemples de conditionnement, on peut citer les bitumes sous forme de granules transportés et/ou stockés dans des sacs, souvent utilisés dans des endroits où la température ambiante est élevée. Ces granules présentent l'avantage d'être facilement manipulables. US 3 026 568 décrit des granules de bitume recouverts d'un matériau poudreux, tel que de la poudre de calcaire. Néanmoins, ce type de bitume en granules n'empêche pas le fluage du bitume, notamment à température ambiante élevée.

La demande WO 2009/153324 décrit des granules de bitume enrobés par un composé anti-agglomérant polymérique, en particulier du polyéthylène. L'inconvénient de cet enrobage est qu'il modifie les propriétés du bitume lors de son application routière.

La demande WO 2016/016318 décrit des granules de bitume comprenant un additif chimique qui peut être un mono ou un polyacide, un hydrazide, ou un diamide. Ces granules de bitume permettent le transport et/ou le stockage et/ou la manipulation du bitume à température ambiante sans que celui-ci ne flue, ainsi que la réduction de leur adhésion et agglomération entre eux.

Le document WO2015/158889 décrit l'utilisation comme liant de collage d'une composition bitumineuse comprenant au moins un additif acide de formule (I) : $R^1$-$(COOH)_z$ dans laquelle $R^1$ est une chaîne hydrocarbonée, linéaire ou ramifiée, saturée ou insaturée comprenant de 4 à 68 atomes de carbone, et z un entier variant de 1 à 4. Une telle composition est stockée sous forme de pains de bitume.

Le document WO2008/107551 décrit une composition bitumineuse comprenant une partie majeure d'au moins un bitume et une partie mineure d'au moins un additif chimique organogélateur qui peut être un polyacide, un hydrazide, ou un diamide. Une telle composition présente des propriétés de viscosité et de dureté thermoréversibles.

FR 3 024 454 divulgue un procédé de transport et/ou de stockage de bitume routier à froid sous la forme de pains. Le pain de bitume comprend au moins un additif chimique choisi parmi : un composé de type acide, notamment diacide et un composé de type diamide.

CN 101 585 118 divulgue un flux de brasage écologique pour préparer une pâte à souder à basse température et exempte de plomb. Le flux de brasage comprend notamment de la résine, un agent activateur et un agent rhéologique.

Il subsiste toutefois le besoin de compositions de liants tels que des bitumes, des liants clairs ou des liants à base de brai, présentant des propriétés de résistance mécanique améliorées, notamment de dureté améliorée, sans que la viscosité à chaud de ces compositions devienne trop élevée ce qui permet d'abaisser la température d'enrobage et d'application des asphaltes coulés. En outre, on a cherché notamment à mettre au point des compositions de liants qui puissent être formulées sous forme de pain ou de granule avec un fluage réduit par rapport aux compositions de l'art antérieur, de sorte qu'un enrobage par une coque à base de polymère ou de gel n'est pas nécessaire.

La Demanderesse a découvert de manière surprenante une nouvelle composition de liant qui permet de préparer des asphaltes coulés dont les propriétés mécaniques sont améliorées et dont la gamme de températures d'application est abaissée, c'est-à-dire comprise entre 160 et 200°C, soit significativement inférieure à la gamme de température classique d'application des asphaltes coulés, comprise entre 200 et 230°C.

Cette nouvelle composition de liant permet de formuler des asphaltes coulés qui présentent des propriétés de résistance mécanique, notamment des propriétés de résistance à l'indentation, améliorées ainsi qu'une température d'enrobage et d'application abaissée.

La Demanderesse a donc découvert une nouvelle composition de liant qui permet une mise en œuvre pour la fabrication d'asphaltes coulés, qui permet une plus grande maniabilité des asphaltes coulés lorsqu'ils sont appliqués comme revêtements de chaussées.

En outre, la composition de liant mise au point par la Demanderesse peut être sous forme divisée, notamment sous forme de granules ou de pains de liant, tout en évitant et en réduisant l'adhésion et l'agglomération des granules ou des pains lors du transport et/ou du stockage et/ou de la manipulation du liant, à température ambiante élevée, sur des longues périodes. Par ailleurs, les propriétés du liant sont conservées au cours du temps.

Plus précisément, la Demanderesse a mis en évidence que cette nouvelle composition de liant permet de résister au fluage dans des conditions extrêmes de transport et/ou de stockage et/ou de manipulation, dans des conditions de compression, notamment dues au stockage, sur des périodes très longues.

Cette nouvelle composition permet de former des granules de liant et des pains de liant qui ne nécessitent pas un enrobage par un gel ou une coque ou un agent anti-agglomérant pour ne pas adhérer ou fluer. Toutefois, ces possibilités d'enrobage ne sont pas exclues de la portée de l'invention.

Par ailleurs, lors de la fabrication d'enrobés, les granulats étant chauffés et mélangés avec la composition de liant solide, ils font fondre cette dernière et on évite ainsi des étapes de chauffage et de maintien à température élevée du liant, étapes qui sont à la fois couteuses et polluantes.

## Résumé de l'invention

L'invention concerne l'utilisation d'une composition comprenant au moins :

- Une base de liant choisie parmi :
  - une base bitume,
  - une base de brai,
  - un liant clair, ou
  - un mélange d'une ou plusieurs de ces bases de liant,
- Un composé acide de formule générale (I) :

$$R\text{-}(COOH)_z \qquad (I)$$

dans laquelle R représente une chaîne linéaire ou ramifiée, saturée ou insaturée comprenant de 4 à 68 atomes de carbone et z est un entier variant de 2 à 4,

- Un composé amide de formule générale (II) :

$$R'\text{-}(NH)_nCONH\text{-}(X)_m\text{-}(NHCO)_p(NH)_n\text{-}R'' \qquad (II)$$

dans laquelle,

- les groupements R' et R", identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S, et R" peut être H ;
- le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S ;
- n et m et p sont des entiers ayant une valeur de 0 ou 1 indépendamment les uns des autres, et
  les composés (I) et (II) sont présents en un ratio massique allant de 10 :1 à 1 :16, pour préparer une composition d'asphalte coulé.

L'invention a encore pour objet une composition d'asphalte coulé comprenant :

(i) 5 à 20 % d'une composition comprenant au moins :

- Une base de liant choisie parmi :
  - une base bitume,
  - une base de brai,
  - un liant clair, ou
  - un mélange d'une ou plusieurs de ces bases de liant,
- Un composé acide de formule générale (I) :

$R\text{-}(COOH)_z$ (I)

dans laquelle R représente une chaîne linéaire ou ramifiée, saturée ou insaturée comprenant de 4 à 68 atomes de carbone et z est un entier variant de 2 à 4,

- Un composé amide de formule générale (II) :

$R'\text{-}(NH)_nCONH\text{-}(X)_m\text{-}(NHCO)_p(NH)_n\text{-}R''$ (II)

dans laquelle,

- les groupements R' et R", identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S, et R" peut être H ;
- le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S ;
- n et m et p sont des entiers ayant une valeur de 0 ou 1 indépendamment les uns des autres, et les composés (I) et (II) sont présents en un ratio massique allant de 10 :1 à 1 :16, et

(ii) 15 à 40% de fines,
(iii) de 15 à 45% de sable,
(iv) de 10 à 45% de gravillons,
les pourcentages étant exprimés en masse par rapport à la masse totale de la composition.

Selon un mode de réalisation préféré, les composés (I) et (II) sont présents en un ratio massique allant de 5 :1 à 1 :9.

Selon un mode de réalisation préféré, l'additif (I) est un diacide de formule générale $HOOC\text{-}C_wH_{2w}\text{-}COOH$ dans laquelle w est un entier variant de 4 à 22.

Selon un mode de réalisation préféré, la composition d'asphalte coulé comprend de 0,1% à 5% en masse de l'additif (**I**) par rapport à la masse totale de la composition de liant.

Selon une première variante préférée, l'additif (II) est choisi parmi ceux de formule (IIA) :

$R'\text{-}CONH\text{-}(X)_m\text{-}NHCO\text{-}R''$ (IIA)

dans laquelle,

- les groupements R' et R", identiques ou différents, représentent une chaîne hydrocarbonée saturée ou insaturée, linéaire, ramifiée ou cyclique, comprenant de 1 à 22 atomes de carbone, et comprenant éventuellement des hétéroatomes, tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S;
- le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S ;
- m est un entier ayant une valeur de 0 ou 1.

Selon une autre variante préférée, l'additif (II) est choisi parmi ceux de formule (IIB) :

$R'\text{-}CONH\text{-}R''$ (IIB)

dans laquelle,

- les groupements R' et R", identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S.

Selon un mode de réalisation préféré, le composé de formule générale (II) est choisi parmi :

- les dérivés hydrazides tels que : $C_5H_{11}$-CONH-NHCO-$C_5H_{11}$, $C_9H_{19}$-CONH-NHCO-$C_9H_{19}$, $C_{11}H_{23}$-CONH-NHCO-$C_{11}H_{23}$, $C_{17}H_{35}$-CONH-NHCO-$C_{17}H_{35}$, ou $C_{21}H_{43}$-CONH-NHCO-$C_{21}H_{43}$ ;
- les diamides tels que le N,N'-éthylènedi(laurylamide) de formule $C_{11}H_{23}$-CONH-$CH_2$-$CH_2$-NHCO-$C_{11}H_{31}$, le N,N'-éthylènedi(myristylamide) de formule $C_{13}H_{27}$-CONH-$CH_2$-$CH_2$-NHCO-$C_{13}H_{27}$, le N,N'-éthylènedi(palmitamide) de formule $C_{15}H_{31}$-CONH-$CH_2$-$CH_2$-NHCO-$C_{15}H_{31}$, le N,N'-éthylènedi(stéaramide) de formule $C_{17}H_{35}$-CONH-$CH_2$-$CH_2$-NHCO-$C_{17}H_{35}$ ;
- les monoamides tels que le laurylamide de formule $C_{11}H_{23}$-$CONH_2$, le myristylamide de formule $C_{13}H_{27}$-$CONH_2$, le palmitamide de formule $C_{15}H_{31}$-$CONH_2$, le stéaramide de formule $C_{17}H_{35}$-$CONH_2$.

L'invention concerne un procédé de fabrication d'asphaltes coulés tel que décrits ci-dessus et de façon détaillée ci-dessous qui comprend au moins les étapes de :

- chauffage des granulats à une température allant de 100°C à 180°C, de préférence de 120°C à 160°C,
- mélange des granulats avec la composition de liant,
- pétrissage du mélange,
- obtention d'une composition d'asphalte coulé.

Selon un mode de réalisation préféré du procédé, la composition de liant est mise en œuvre sous forme solide à froid et divisée.

Selon un mode de réalisation préféré, le procédé ne comporte pas d'étape de chauffage de la composition de liant avant son mélange avec les granulats.

L'invention concerne également un revêtement d'une surface, ce revêtement étant obtenu par un procédé comprenant la préparation d'une composition d'asphalte coulé telle que décrite ci-dessus et de façon détaillée ci-dessous, son application et son étalement sur ladite surface.

**Description détaillée**

L'invention repose sur la combinaison synergique de deux additifs, un composé acide et un composé de type amide. De tels composés étaient connus de l'art antérieur pour la formulation de compositions de bitume solides à froid et sous forme divisée. Toutefois, la sélection de deux de ces additifs dans des proportions particulières permet d'observer une synergie d'action entre ces additifs sur les propriétés de résistance mécanique de ces compositions de liant, en particulier sur leur résistance à l'indentation, sans que la viscosité à chaud soit dégradée par rapport aux compositions de l'art antérieur.

Par « température ambiante élevée », on entend la température résultante des conditions climatiques dans lesquelles est transportée et/ou stockée et/ou manipulée la composition de liant. Plus précisément, la température ambiante élevée équivaut à la température atteinte lors du transport et/ou du stockage de la composition de liant, cette température étant inférieure à 100°C. Avantageusement, la température ambiante élevée est de 20°C à 90°C, de préférence de 20°C à 80°C, plus préférentiellement de 40°C à 80°C, encore plus préférentiellement de 40°C à 60°C, étant entendu que la température ambiante élevée implique qu'aucun apport de chaleur n'est apporté autre que celui résultant des conditions climatiques.

Par « conditions extrêmes », on entend les conditions de transport et/ou de stockage et/ou de manipulation de la composition de liant avec une température de transport et/ou de stockage et/ou de manipulation de la composition de liant allant jusqu'à 100°C, avantageusement, de 20°C à 90°C, de préférence de 20°C à 80°C, plus préférentiellement de 40°C à 80°C, encore plus préférentiellement de 40°C à 60°C.

L'invention concerne des compositions de liant susceptibles d'être solides lorsqu'elles sont soumises à des températures ambiantes élevées, en particulier une température allant jusqu'à 100°C, avantageusement, de 20°C à 90°C, de préférence de 20°C à 80°C, plus préférentiellement de 40°C à 80°C, encore plus préférentiellement de 40°C à 60°C.

L'invention concerne des compositions de liants susceptibles d'être solides lorsqu'elles sont soumises à des températures ambiantes élevées, en particulier une température allant jusqu'à 100°C, avantageusement, de 20°C à 90°C, de préférence de 20°C à 80°C, plus préférentiellement de 40°C à 80°C, encore plus préférentiellement de 40°C à 60°C.

Par « liant solide à température ambiante élevée », on entend un liant présentant un aspect solide à température ambiante élevée dans des conditions de transport et/ou de stockage et/ou de manipulation. Plus précisément, on entend par liant solide à température ambiante élevée, un liant qui conserve son aspect solide tout au long du transport et/ou du stockage et/ou de la manipulation à température ambiante élevée, c'est-à-dire un liant qui ne flue pas à une température

allant jusqu'à 100°C, avantageusement, de 20°C à 90°C, de préférence de 20°C à 80°C, plus préférentiellement de 40°C à 80°C, encore plus préférentiellement de 40°C à 60°C,sous son propre poids et de plus, qui ne flue pas lorsqu'il est soumis à une température allant jusqu'à 100°C, avantageusement, de 20°C à 90°C, de préférence de 20°C à 80°C, plus préférentiellement de 40°C à 80°C, encore plus préférentiellement de 40°C à 60°C,et à des forces de pressions issues des conditions de transport et/ou de stockage et/ou de manipulation.

Un test de fluage permettant d'évaluer cette propriété est exposé dans la partie expérimentale.

Par « liant » on entend au sens de la présente invention une composition comprenant au moins une base de liant choisie parmi une base bitume, une base de brai, un liant clair ou leurs mélanges, ladite composition étant utilisable en mélange avec des granulats, en substitution des liants classiquement utilisés, pour la préparation d'asphaltes coulés.

Par « pénétrabilité », on entend ici la mesure dite de « pénétrabilité à l'aiguille » qui est réalisée au moyen d'un test normalisé NF EN 1426 à 25°C (P25). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume ou d'un autre type de liant, au bout d'un temps de 5 secondes, d'une aiguille dont le poids avec son support est de 100g. La norme NF EN 1426 remplace la norme homologuée NF T 66-004 de décembre 1986 avec effet au 20 décembre 1999 (décision du Directeur Général d'AFNOR en date du 20 novembre 1999).

Par « point de ramollissement », on entend la mesure dite de « point de ramollissement » qui est réalisée au moyen d'un test normalisé NF EN 1427. Le point de ramollissement bille anneau correspond à la température à laquelle une bille d'acier de diamètre standard, après avoir traversé la matière à tester (collée dans un anneau), atteint le fond d'un vase standardisé rempli d'un liquide que l'on chauffe progressivement, et dans lequel on a plongé l'appareil.

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

L'expression « compris entre X et Y » inclut les bornes, sauf mention contraire explicite. Cette expression signifie donc que l'intervalle visé comprend les valeurs X, Y et toutes les valeurs allant de X à Y.

Par « composition d'asphalte coulé », on entend le mélange des différents composants d'un asphalte coulé avant leur mise en œuvre par coulée à chaud pour former un revêtement d'asphalte sur un support. Par « revêtement », on entend le matériau refroidi obtenu après la mise en œuvre (malaxage et coulée) de la composition d'asphalte coulé.

Au sens de l'invention, les termes « liant » et « liant routier » sont utilisés, de manière équivalente et indépendamment l'un de l'autre. Par « liant » ou « liant routier », on entend toutes compositions constituées d'une ou de plusieurs bases de liants choisies parmi les bases bitume, les bases de brais, les liants clairs ou leurs mélanges et comprenant éventuellement un ou plusieurs additifs chimiques, lesdites compositions étant susceptibles d'être utilisées dans une application routière, en particulier pour la production d'asphaltes coulés.

Au sens de l'invention, les termes « bitume » et « liant bitumineux » sont utilisés, de manière équivalente et indépendamment l'un de l'autre. Par « bitume » ou « liant bitumineux », on entend toutes compositions bitumineuses constituées d'une ou de plusieurs bases bitumes et comprenant éventuellement un ou plusieurs additifs chimiques, lesdites compositions étant susceptibles d'être utilisées dans une application routière, notamment en mélange avec des granulats.

L'invention concerne l'utilisation d'une composition de liant particulière, comprenant au moins une base de liant et au moins deux additifs ayant une action synergique sur les propriétés mécaniques et d'abaissement de viscosité. Cette amélioration des propriétés mécaniques consiste notamment en une amélioration de la résistance à l'indentation, qui est une propriété particulièrement recherchée pour la formulation d'asphaltes coulés. Ceci notamment parce que les asphaltes coulés sont utilisés pour le revêtement de sols soumis à des contraintes mécaniques répétées provoquées par les talons de chaussures. Par abaissement de viscosité, on entend un abaissement des températures d'enrobage et d'application des asphaltes coulés en deçà de 200°C.

La composition de liant

Selon l'invention la composition de liant comprend au moins une base de liant choisie parmi les bases bitume, les bases de brais, les liants clairs ou leurs mélanges.

Avantageusement, la base de liant représente au moins 50% en masse par rapport à la masse totale de la composition de liant, encore plus avantageusement au moins 75% en masse par rapport à la masse totale de la composition de liant.

De façon encore plus avantageuse, la base de liant représente au moins 90 % en masse par rapport à la masse totale de la composition de liant, et de manière préférée au moins 95 % en masse par rapport à la masse totale de la composition de liant.

• **Première variante**

Selon une première variante, la base de liant comprend au moins une base bitume. Selon cette variante, elle peut également comprendre, de façon non limitative, au moins un brai, au moins une huile, au moins un élastomère, et/ou au moins un adjuvant polymère oléfinique.
Selon un mode de réalisation de cette première variante, la base de liant comprend au moins une base bitume et de 0,5% à 15% en masse, de préférence de 1% à 15% en masse, plus préférentiellement de 2% à 12% en masse de polymère, avantageusement d'élastomère, par rapport à la masse totale de la base de liant.
Selon un mode de réalisation de cette première variante, la composition de liant comprend de 0,05% à 15% en masse, de préférence de 0,1% à 10% en masse, plus préférentiellement de 0,5% à 6% en masse d'au moins un adjuvant polymère oléfinique par rapport à la masse totale de la base de liant.
Selon un mode de réalisation, la base bitume est utilisée en mélange avec au moins un brai.
Avantageusement, selon ce mode de réalisation, la base de liant comprend :

a) au moins un brai ayant une pénétrabilité à 25°C allant de 0 à 20 1/10 mm, une température de ramollissement bille et anneaux (TBA) allant de 115°C à 175°C, étant entendu que la pénétrabilité est mesurée selon la norme EN 1426 et que la TBA est mesurée selon la norme EN 1427, et
b) au moins une base bitume.

Avantageusement, selon ce mode de réalisation, la base de liant comprend de 2 à 30% en masse de brai par rapport à la masse totale de la base de liant, de préférence de 3 à 20% en masse de brai par rapport à la masse totale de la base de liant.

• **Seconde variante**

Selon une seconde variante, la base de liant comprend au moins un brai. Selon cette variante, elle peut également comprendre, de façon non limitative, au moins une base bitume, au moins une huile, au moins un élastomère, et/ou au moins un adjuvant polymère oléfinique.
Selon un mode de réalisation, le brai est utilisé en mélange avec au moins une huile dans la base de liant.
Avantageusement, selon ce mode de réalisation, la base de liant comprend :

◦ 90 % à 10 % en masse d'au moins une huile choisie parmi : les huiles hydrocarbonées d'origine pétrolière ou synthétique,
◦ 10 % à 90 % en masse d'au moins un brai
par rapport à la masse totale de la base de liant.

De préférence, selon ce mode de réalisation, la base de liant comprend :

◦ 10 % à 70 % en masse d'au moins une huile, choisie parmi : les huiles hydrocarbonées d'origine pétrolière ou synthétique,
◦ 90 % à 30 % en masse d'au moins un brai,
par rapport à la masse totale de la base de liant.

Plus préférentiellement, selon ce mode de réalisation, la base de liant comprend :

◦ 15 % à 50 % en masse d'au moins une huile choisie parmi : les huiles hydrocarbonées d'origine pétrolière ou synthétique,
◦ 50 % à 85 % en masse d'au moins un brai,
par rapport à la masse totale de la base de liant.

• **Troisième variante**

Selon une troisième variante, la base de liant est une base de liant clair. Habituellement, la base de liant clair comprend :

i) un agent plastifiant,
ii) un agent structurant, par exemple une résine hydrocarbonée ou végétale,
iii) un polymère,

iv) les cas échéant, des agents dopants, ou dopes, ou dopes d'adhésivité.

Dans un mode de réalisation, la quantité d'agent plastifiant mise en œuvre dans la base de liant clair est de 40% à 80%, de préférence de 45% à 70% en poids par rapport au poids total de base de liant clair.

Dans un mode de réalisation, le rapport en poids entre l'agent structurant et l'agent plastifiant mis en œuvre pour la préparation de la base de liant clair, est de 0,3 à 1,5, par exemple de 0,5 à 1.

Dans un mode de réalisation spécifique, la quantité d'agent structurant mise en œuvre dans le procédé de préparation de la base de liant clair est de 25 à 50% en poids par rapport au poids total de base de liant clair.

Dans un mode de réalisation spécifique, la quantité totale de polymère dans la base de liant clair est de 0,5 à 20% en masse, de préférence de 1 à 10%, de préférence de 1 à 7%, par exemple de 2% à 5% par rapport à la masse totale de base de liant clair.

Lorsqu'ils sont ajoutés à la base de liant clair, les dopes d'adhésivité représentent en général entre 0,05% et 0,5% en poids par rapport au poids de la base de liant clair. Par exemple, dans un mode de réalisation spécifique, on ajoutera de 0,05% à 0,5% d'amine, de préférence de 0,1% à 0,3% d'amine par rapport à la masse totale de base de liant clair.

La base bitume

La base bitume peut être utilisée seule comme base de liant ou en mélange avec d'autres composants tels qu'une huile, un brai, un polymère, et/ou un adjuvant polymère oléfinique, pour former une base de liant plus complexe.

Parmi les bases bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bases bitumes selon l'invention sont avantageusement choisies parmi les bases bitumes provenant du raffinage du pétrole brut. Les bases bitumes peuvent être choisies parmi les bases bitumes ou mélanges de bases bitumes provenant du raffinage du pétrole brut, en particulier des bases bitumes contenant des asphaltènes ou des brais. Les bases bitumes peuvent être obtenues par des procédés conventionnels de fabrication des bases bitumes en raffinerie, en particulier par distillation directe et/ou distillation sous vide du pétrole. Ces bases bitumes peuvent être éventuellement viscoréduites et/ou désasphaltées et/ou rectifiées à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus atmosphériques. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir une base soufflée, ou semi-soufflée ou oxydée ou rectifiée à l'air ou rectifiée partiellement à l'air.

Les différentes bases bitumes obtenues par les procédés de raffinage peuvent être combinées entre elles pour obtenir le meilleur compromis technique. La base bitume peut aussi être une base bitume de recyclage. Les bases bitumes peuvent être des bases bitumes de grade dur ou de grade mou.

Selon l'invention, pour les procédés conventionnels de fabrication des bases bitumes, on opère à des températures de fabrication comprises entre 100°C et 200°C, de préférence entre 140°C et 200°C, plus préférentiellement entre 140°C et 170°C, et sous agitation pendant une durée d'au moins 10 minutes, de préférence comprise entre 30 minutes et 10 heures, plus préférentiellement entre 1 heure et 6 heures. On entend par température de fabrication, la température de chauffage de la ou des bases bitumes avant mélange ainsi que la température de mélange. La température et la durée du chauffage varient selon la quantité de bitume utilisée et sont définies par la norme NF EN 12594.

Selon l'invention, les bitumes soufflés peuvent être fabriqués dans une unité de soufflage, en faisant passer un flux d'air et/ou d'oxygène à travers une base bitumineuse de départ. Cette opération peut être menée en présence d'un catalyseur d'oxydation, par exemple de l'acide phosphorique. Généralement, le soufflage est réalisé à des températures élevées, de l'ordre de 200 à 300°C, pendant des durées relativement longues typiquement comprises entre 30 minutes et 2 heures, en continu ou par lots. La durée et la température de soufflage sont ajustées en fonction des propriétés visées pour le bitume soufflé et en fonction de la qualité du bitume de départ.

Préférentiellement, la base bitume mise en œuvre pour fabriquer les compositions de l'invention présente une pénétrabilité à l'aiguille mesurée à 25°C selon la norme EN 1426 de 5 à 330 1/10 mm, de préférence de 20 à 220 1/10 mm. De manière bien connue, la mesure dite de « pénétrabilité à l'aiguille » est réalisée au moyen d'un test normalisé NF EN 1426 à 25°C ($P_{25}$). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume, au bout d'un temps de 5 secondes, d'une aiguille dont le poids avec son support est de 100 g. La norme NF EN 1426 remplace la norme homologuée NF T 66-004 de décembre 1986 avec effet au 20 décembre 1999 (décision du Directeur Général d'AFNOR en date du 20 novembre 1999).

Le brai

Le brai peut être utilisé seul comme base de liant ou en mélange avec d'autres composants tels qu'une huile ou une base bitume pour former une base de liant plus complexe.
Selon un mode de réalisation de l'invention, le brai est un brai soufflé, également appelé un brai oxydé. Au sens de l'invention, on utilisera indépendamment l'un de l'autre, les termes « brai soufflé » et « brai oxydé ».
Selon le dictionnaire français, on entend par « brai », un résidu de distillation des goudrons de pétrole, de houille, de bois ou d'autres molécules organiques.
Le brai utilisé dans l'invention est choisi parmi les résidus de distillation du pétrole, également appelés « brai de pétrole ».
Dans la description, on utilisera indépendamment l'un de l'autre, les termes « brai », « brai de pétrole » et « brai de désasphaltage ».
Les brais peuvent être obtenus par des procédés conventionnels de fabrication en raffinerie. Le procédé de fabrication correspond à la succession d'une distillation atmosphérique et d'une distillation sous vide. Dans un premier temps, le pétrole brut est soumis à une distillation à pression atmosphérique, qui conduit à l'obtention d'une phase gazeuse, de différents distillats et d'un résidu de distillat atmosphérique. Puis, le résidu de la distillation atmosphérique est soumis lui-même à une distillation sous pression réduite, appelée distillation sous vide, qui permet de séparer un gazole lourd, diverses coupes de distillats et un résidu de distillation sous vide. Ce résidu de distillation sous vide contient du « brai de pétrole » en concentration variable.
Il est possible d'obtenir le « brai de pétrole » selon deux procédés :

1$^{ère}$ procédé :

Le résidu de distillation sous vide est soumis à une opération de désasphaltage par addition d'un solvant approprié, tel que le propane, qui permet ainsi de précipiter le brai et de le séparer des fractions légères telles que l'huile désasphaltée.

2$^{nd}$ procédé :

Le résidu de distillation sous vide est soumis à une extraction au solvant, et plus précisément au furfural. Cet aldéhyde hétérocyclique présente la particularité de solubiliser sélectivement les composés aromatiques et polycycliques. Ce procédé permet ainsi d'éliminer les extraits aromatiques et de récupérer le « brai de pétrole ».
De préférence, le brai oxydé utilisé selon l'invention est obtenu par oxydation d'un mélange comprenant du brai et un diluant, tel qu'une essence légère, également appelé « fluxant » soumis à une opération d'oxydation dans une tour de soufflage en présence d'un catalyseur, à une température fixée et à une pression donnée.
Par exemple, les brais oxydés peuvent être fabriqués dans une unité de soufflage, en faisant passer un flux d'air et/ou d'oxygène à travers un brai de départ. Cette opération peut être menée en présence d'un catalyseur d'oxydation, par exemple de l'acide phosphorique. Généralement, l'oxydation est réalisée à des températures élevées, de l'ordre de 200 à 300°C, pendant des durées relativement longues typiquement comprises entre 30 minutes et 2 heures, en continu ou par lots. La durée et la température d'oxydation sont ajustées en fonction des propriétés visées pour le brai oxydé et en fonction de la qualité du brai de départ.
Selon un mode de réalisation de l'invention, le brai se présente sous forme de granulés avant son introduction dans l'huile chauffée. Un tel mode de réalisation facilite la manipulation des composants et la mise en œuvre du procédé.
Les qualités mécaniques des brais sont généralement appréciées en déterminant une série de caractéristiques mécaniques par des essais normalisés, dont les plus utilisés sont la pénétrabilité à l'aiguille exprimée en 1/10 mm et le point de ramollissement déterminé par l'essai bille et anneau, encore appelé température de ramollissement bille et anneau (TBA).
Selon un mode de réalisation de l'invention, le brai présente une pénétrabilité à l'aiguille à 25°C de 0 à 20 1/10 mm, de préférence de 5 à 20 1/10 mm, étant entendu que la pénétrabilité est mesurée selon la norme EN 1426.
Selon un mode de réalisation de l'invention, le brai présente un point de ramollissement compris entre 115°C et 175°C. Parmi des exemples de brais utilisés dans l'invention, il y a des brais présentant respectivement un point de ramollissement compris entre 115°C et 125°C, entre 135 et 145°C ou encore entre 165 et 175°C.

Le liant clair

Au sens de l'invention, les termes « liant clair » et « base de liant clair » sont utilisés, de manière équivalente et indépendamment l'un de l'autre.
Selon un mode de réalisation de l'invention, le liant clair comprend :

i) un agent plastifiant, par exemple une huile naturelle ou synthétique, dépourvue d'asphaltènes,
ii) un agent structurant, par exemple une résine hydrocarbonée ou végétale,
iii) un polymère,
iv) les cas échéant, des agents dopants, ou dopes, ou dopes d'adhésivité.

Des compositions de liant clair sont décrites dans les demandes de brevet suivantes et ces compositions de liant clair peuvent être mises en œuvre comme base de liant clair dans la présente invention.

On peut utiliser comme base de liant clair un liant clair comprenant des huiles blanches hydrogénées comprenant au moins 60% de carbones paraffiniques (selon la méthode ASTM D2140), et une résine hydrocarbonée, le cas échéant en mélange avec des copolymères du type éthylène-acétate de vinyle (EVA) ou polyéthylène basse densité, par exemple du type EPDM (éthylène-propylène-diène-monomère), tel que décrit dans WO 01/53409.

On peut utiliser comme base de liant clair un liant clair comprenant une huile avec une teneur en composés naphténiques entre 35% et 80% et une résine hydrocarbonée, comme décrit dans EP 1783174.

On peut utiliser comme base de liant clair un liant clair comprenant une huile synthétique, une résine et un polymère de type SBS ou SIS, comme décrit dans EP 1473327.

On peut utiliser comme base de liant clair, un liant clair comprenant :

- au moins une huile d'origine pétrolière, de préférence une huile aromatique comprenant des extraits aromatiques de résidus de pétrole, obtenus par extraction ou désaromatisation de résidus de distillations de coupes pétrolières, et
- au moins une résine d'origine végétale, de préférence choisie parmi les esters de colophanes, les esters du glycérol et de colophanes, les esters du pentaérythritol et de colophanes, pris seuls ou en mélange, comme décrit dans WO 2009/150519.

On peut utiliser comme base de liant clair un liant synthétique clair comprenant :

- au moins une huile d'origine végétale de préférence choisie parmi les huiles de colza, de tournesol, de soja, de lin, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coco et de coprah, et leurs mélanges,
- au moins une résine d'origine pétrolière, de préférence choisie parmi les résines d'origine pétrolière hydrocarbonées issues de la copolymérisation de coupes pétrolières aromatiques, aliphatiques, cyclopentadiéniques prises seules ou en mélange et,
- au moins un polymère, de préférence choisi parmi les copolymères de styrène et de butadiène, les copolymères de styrène et d'isoprène, les terpolymères éthylène/propène/diène, les polychloroprènes, les copolymères d'éthylène et d'acétate de vinyle, les copolymères d'éthylène et d'acrylate de méthyle, les copolymères d'éthylène et d'acrylate de butyle, les terpolymères éthylène/acrylate de méthyle/méthacrylate de glycidyle, les terpolymères éthylène/acrylate de butyle/anhydride maléique, les polypropylènes atactiques, pris seuls ou en mélanges,

la quantité d'huile d'origine végétale dans le liant étant supérieure ou égale à 10% en masse et la quantité de polymère dans le liant étant inférieure ou égale à 15% en masse, comme décrit dans WO 2010/055491.

Selon un autre mode de réalisation de l'invention, la base de liant clair comprend :

(i) un agent plastifiant constitué d'une huile contenant une teneur totale en composés paraffiniques, mesurée selon la méthode ASTM D2140, d'au moins 50%, de préférence d'au moins 60% en poids, plus préférentiellement comprise entre 50% et 90%, de préférence entre 60% et 80%, et
(ii) un copolymère à base de motifs diène conjugué et de motifs hydrocarbure monovinyl aromatique, par exemple à base de motif butadiène et de motifs styrène.

De préférence, la base de liant clair comprend de préférence (i) de 40 à 80% en poids d'agent plastifiant, (ii) de 20 à 50% en poids de résine, (iii) de 1 à 7% en poids de copolymère ; et, (iv) éventuellement de 0,05% à 0,5% en poids de dope d'adhésivité, par exemple d'amine, par rapport au poids de base de liant clair.

Avantageusement, la base de liant clair comprend de préférence (i) de 40 à 80% en poids d'agent plastifiant, (ii) de 20 à 50% en poids de résine, (iii) de 1 à 7% en poids de copolymère ; et, (iv) de 0,05% à 0,5% en poids de dope d'adhésivité, par exemple d'amine, par rapport au poids de base de liant clair.

Encore plus avantageusement, la base de liant clair comprend (i) de 45% à 70% en poids d'agent plastifiant, (ii) de 25 à 50% en poids de résine, (iii) de 1% à 7% en poids de copolymère ; et, (iv) éventuellement de 0,1% et 0,3% en poids de dope d'adhésivité, par rapport au poids total de base de liant clair.

De préférence, la base de liant clair consiste essentiellement en (i) de 40 à 80% en poids d'agent plastifiant,

(ii) de 20 à 50% en poids de résine, (iii) de 1 à 7% en poids de copolymère, par rapport au poids total de base de liant clair.

Avantageusement, la base de liant clair consiste essentiellement en (i) de 40 à 80% en poids d'agent plastifiant, (ii) de 20 à 50% en poids de résine, (iii) de 1 à 7% en poids de copolymère et (iv) de 0,05% à 0,5% en poids de dope d'adhésivité, par rapport au poids total de base de liant clair.

Encore plus avantageusement, la base de liant clair consiste essentiellement en (i) de 45% à 70% en poids d'agent plastifiant, (ii) de 25 à 50% en poids de résine (iii) de 1% à 7% en poids de copolymère ; et, (iv) de 0,1% et 0,3% en poids de dope d'adhésivité, par rapport au poids total de base de liant clair.

De préférence, le copolymère est un copolymère à base de motifs de styrène et de butadiène qui comprend une teneur pondérale en butadiène 1-2 allant de 5 à 70%.

De préférence, le copolymère est avantageusement un copolymère à base de motifs de styrène et de butadiène qui comprend une teneur pondérale en butadiène 1-2 allant de 5 à 70% et une teneur pondérale en groupement 1,2-vinyle comprise entre 10 et 40%.

Par exemple, ledit copolymère à base de motifs de styrène et de butadiène a une masse moléculaire moyenne en masse comprise entre 10 000 et 500 000, de préférence entre 50 000 et 200 000, et plus préférentiellement entre 50 000 et 150 000 daltons. De préférence, on utilisera un copolymère bloc styrène/butadiène ou bloc styrène/butadiène/styrène.

Les bases de liants clairs selon l'invention sont avantageusement caractérisées en ce qu'elles présentent un indice de couleur inférieur ou égal à 4, de préférence inférieur ou égal à 3, tel que déterminé selon l'échelle ASTM DH4.

En outre, elles peuvent avantageusement présenter une température de ramollissement Température Bille-Anneau déterminée selon la norme NF EN1427 comprise entre 55°C et 90°C.

De préférence, la base de liant clair selon l'invention a une pénétrabilité à 25°C, mesurée selon la norme NF EN 1426, comprise entre 10 et 220 1/10 mm, de préférence entre 30 et 100 1/10 mm, plus préférentiellement entre 40 et 80 1/10 mm. L'homme du métier peut moduler la pénétrabilité de la base de liant clair notamment en choisissant judicieusement le rapport en poids [agent structurant/agent plastifiant] dans la composition de la base de liant clair. En effet, il est connu qu'une augmentation de ce rapport permet de diminuer la pénétrabilité à 25°C.

Les bases de liants clairs mises en œuvre dans l'invention peuvent être préparées par exemple selon le procédé suivant comprenant les étapes de :

(i) mélange de l'agent plastifiant, par exemple l'huile DAO, et chauffage à une température comprise entre 140-200°C, par exemple de 10 minutes à 30 minutes,
(ii) ajout de l'agent structurant, par exemple la résine hydrocarbonée, mélange et chauffage à une température comprise entre 140-200°C, par exemple de 30 minutes à 2 heures,
(iii) ajout du ou des polymères, par exemple le SBS, mélange et chauffage à une température comprise entre 140-200°C, par exemple, de 90 minutes à 3 heures, de préférence de 90 minutes à 2 heures 30,
(iv) ajout éventuel d'un dope d'adhésivité, mélange et chauffage à une température comprise entre 140-200°C, par exemple, de 5 minutes à 20 minutes.

L'ordre des étapes (i) à (iv) peut être modifié.

## Les huiles

L'huile peut être de tout type, elle est choisie en fonction des conditions de l'application ultérieure.

L'huile est utilisée pour la formulation d'une base de liant telle que par exemple une base de liant clair, ou en mélange avec une base bitume ou avec un brai.

En particulier, l'huile peut être l'agent plastifiant du liant clair.

Par « agent plastifiant du liant clair », on entend au sens de l'invention, un constituant chimique permettant de fluidifier et de réduire la viscosité et le module de la base de liant clair.

Dans un mode de réalisation de l'invention, l'agent plastifiant du liant clair est choisi parmi les huiles d'origine pétrolière, les huiles d'origine végétale et leurs mélanges.

Dans un mode de réalisation préféré de l'invention, les huiles d'origine végétale sont choisies parmi les huiles de colza, de tournesol, de soja, de lin, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coco et de coprah, et leurs mélanges.

De préférence, les huiles d'origine végétale sont choisies parmi les huiles de colza, de tournesol, de lin, de coco, de soja, et leurs mélanges.

Dans un mode de réalisation préféré de l'invention, les huiles utilisées dans la base de liant clair sont choisies parmi les huiles d'origine pétrolière, notamment les huiles aromatiques, ou les huiles paraffiniques, et les huiles d'origine synthétique.

Pour une utilisation en mélange avec une base bitume ou un brai, de préférence l'huile est une huile hydrocarbonée d'origine pétrolière, d'une huile hydrocarbonée d'origine synthétique ou leurs mélanges.

De préférence, l'huile hydrocarbonée est une huile hydrocarbonée d'origine pétrolière. Elle peut être de type aromatique ou paraffinique.

Selon un premier mode de réalisation, l'huile est composée de 90 à 100% en masse d'au moins une huile hydrocarbonée d'origine pétrolière, avantageusement de 95 à 100%, encore mieux de 98 à 100%, en masse d'au moins une huile hydrocarbonée d'origine pétrolière. Encore plus avantageusement, l'huile est constituée d'une d'huile hydrocarbonée ou d'un mélange d'huiles hydrocarbonées d'origine pétrolière.

Dans un premier mode de réalisation de l'invention, l'huile hydrocarbonée d'origine pétrolière est choisie parmi les huiles aromatiques.

Plus préférentiellement, les huiles aromatiques ont une teneur en composés aromatiques comprise entre 30 et 95% en masse, avantageusement comprise entre 50 et 95% en masse, plus avantageusement comprise entre 60 et 95% en masse par rapport à la masse totale de l'huile aromatique (méthode SARA : Saturés/Aromatiques/Résines/Asphaltènes).

Plus préférentiellement, les huiles aromatiques ont une teneur en composés saturés comprise entre 1 et 20% en masse, avantageusement comprise entre 3 et 15% en masse, plus avantageusement comprise entre 5 et 10% en masse (méthode SARA : Saturés/Aromatiques/Résines/Asphaltènes).

Plus préférentiellement, les huiles aromatiques ont une teneur en composés résiniques comprise entre 1 et 10% en masse, avantageusement comprise entre 3 et 5% en masse, (méthode SARA : Saturés/Aromatiques/Résines/Asphaltènes).

Les teneurs en composés saturés, résiniques et aromatiques mentionnées dans la présente demande sont déterminées selon la norme ASTM D2140, en % en masse par rapport à la masse de l'huile.

Plus préférentiellement, les huiles aromatiques ont une viscosité cinématique à 100°C comprise entre 0,1 et 150 $mm^2/s$, avantageusement comprise entre 5 et 120 $mm^2/s$, plus avantageusement comprise entre 7 et 90 $mm^2/s$ (Méthode ASTM D 445).

Plus préférentiellement, les huiles aromatiques ont un point éclair Cleveland supérieur ou égal à 150°C, avantageusement compris entre 150°C et 600°C, plus avantageusement compris entre 200°C et 400°C (Méthode EN ISO 2592).

Plus préférentiellement, les huiles aromatiques ont un point aniline compris entre 20°C et 120°C, avantageusement compris entre 40°C et 120°C (Méthode ASTM D611).

Plus préférentiellement, les huiles aromatiques ont une masse volumique à 15°C comprise entre 400 $kg/m^3$ et 1500 $kg/m^3$, avantageusement comprise entre 600 $kg/m^3$ et 1200 $kg/m^3$, plus avantageusement comprise entre 800 $kg/m^3$ et 1000 $kg/m^3$ (Méthode ASTM D4052).

Selon ce mode de réalisation avantageux, l'huile aromatique comprend des extraits aromatiques de résidus de pétrole, obtenus par extraction ou désaromatisation de résidus de distillations de coupes pétrolières.

Les extraits aromatiques sont des produits secondaires du processus de raffinage des pétroles bruts, obtenus notamment à partir des produits de la distillation sous vide des résidus atmosphériques. Ils résultent d'une simple ou d'une double extraction du raffinat valorisable dans les lubrifiants, au moyen d'un solvant polaire. Les différents extraits sont classés en différentes catégories en fonction de leur procédé d'obtention et sont les suivants :

- Les DAE (Distillate Aromatic Extract en anglais, ou extrait aromatique de distillat)
- les MES (Mild Extract Solvate en anglais ou solvant d'extraction douce),
- les TDAE (Treated Distillate Aromatic Extract en anglais ou extrait distillé aromatique traité),
- Les RAE (Residual Aromatic Extract en anglais ou extrait aromatique résiduel),
- Les TRAE (Treated Residual Aromatic Extract en anglais ou extrait aromatique résiduel traité)

Par exemple, les huiles aromatiques utilisables selon l'invention peuvent être choisies parmi les produits suivants commercialisés par la société TOTAL sous les dénominations : Plaxolène 50 ® (également vendu sous la marque Régénis 50 ®), Plaxolène TD346 ® et Plaxolène MS132 ®.

Les teneurs respectives en composés paraffiniques, naphténiques et aromatiques dépendent dans une certaine mesure de la nature du pétrole brut à l'origine de l'huile aromatique et du processus de raffinage utilisé.

Par exemple, le Plaxolène 50 ® ou Régénis 50 ® est un RAE (Residual Aromatic Extract) qui présente :

- une masse volumique à 15°C comprise entre 980 $kg/m^3$ et 1010 $kg/m^3$ (Méthode ASTM D4052),
- un point éclair (Cleveland) d'environ 230°C (Méthode EN ISO 2592),
- une viscosité cinématique à 100°C comprise entre 60 et 85 $mm^2/s$ (Méthode ASTM D 445),
- un point d'aniline compris entre 53 et 65°C (Méthode ASTM D611).

Par exemple, le Plaxolène TD346 ® est un TDAE (Treated Distillates Aromatic Extract) qui présente :

- une masse volumique à 15°C comprise entre 940 kg/$m^3$ et 970 kg/$m^3$ (Méthode ASTM D4052),
- un point éclair (Cleveland) d'environ 220°C (Méthode EN ISO 2592),
- une viscosité cinématique à 100°C comprise entre 16 et 23 $mm^2$/s (Méthode ASTM D 445),
- un point d'aniline compris entre 64 et 72°C (Méthode ASTM D611).

Par exemple, le Plaxolène MS132 ® est un MES (Mild Extract Solvate) qui présente :

- une masse volumique à 15°C comprise entre 895 kg/$m^3$ et 925 kg/$m^3$ (Méthode ASTM D4052),
- un point éclair (Cleveland) d'environ 230°C (Méthode EN ISO 2592),
- une viscosité cinématique à 100°C comprise entre 13 et 17 $mm^2$/s (Méthode ASTM D 445),
- un point d'aniline compris entre 85 et 100°C (Méthode ASTM D611).

Selon un second mode de réalisation avantageux, l'huile est une huile paraffinique comprenant majoritairement des extraits paraffiniques de résidus de pétrole. Selon ce mode de réalisation spécifique, avantageusement, l'huile comprend une teneur totale en composés paraffiniques d'au moins 50% en masse, de préférence d'au moins 60% en masse, par exemple comprise entre 50% et 90%, de préférence entre 60% et 90%, plus préférentiellement entre 50% et 80% et en particulier compris entre 55% et 75% ou en particulier compris entre 60% et 75%.

Dans un mode de réalisation plus spécifique, l'huile contient en outre une teneur totale en composés naphténiques qui n'excède pas 25%, par exemple comprise entre 5% et 25%, et en particulier compris entre 10% et 25%.

Dans un mode de réalisation plus spécifique, l'huile contient en outre une teneur totale en composés aromatiques qui n'excède pas 25%, par exemple comprise entre 5% et 25%, et en particulier comprise entre 8% et 18%.

Dans un mode particulièrement préféré, l'huile est une huile paraffinique, comprenant les teneurs respectives :

(i) une teneur totale en composés paraffiniques comprise entre 50% et 90% ;
(ii) une teneur totale en composés naphténiques comprise entre 5% et 25% ; et
(iii) une teneur totale en composés aromatiques comprise entre 5% et 25%.

Dans un mode de réalisation plus particulièrement préféré, l'huile est une huile paraffinique, comprenant les teneurs respectives :

(i) une teneur totale en composés paraffiniques comprise entre 60% et 75% ;
(ii) une teneur totale en composés naphténiques comprise entre 5% et 25% ; et
(iii) une teneur totale en composés aromatiques comprise entre 5% et 25%.

Dans un mode de réalisation encore préféré, l'huile est une huile paraffinique, comprenant les teneurs respectives :

(i) une teneur totale en composés paraffiniques comprise entre 60% et 75% ;
(ii) une teneur totale en composés naphténiques comprise entre 15% et 25% ; et
(iii) une teneur totale en composés aromatiques comprise entre 10% et 15%.

Dans un mode préféré de réalisation de cette variante, les huiles paraffiniques sont issues des coupes de désasphaltage de distillation sous pression réduite (résidu sous vide, RSV) de pétrole brut (ci-après dénommée « huile DAO »). Le principe du désasphaltage repose sur une séparation par précipitation d'un résidu pétrolier en deux phases : i) une phase dite "huile désasphaltée", encore appelée "matrice huile" ou "phase huile" ou DAO (DeAsphalted Oil en anglais) ; et ii) une phase dite "asphalt".

Des huiles répondant aux caractéristiques ci-dessous et utilisables selon l'invention sont obtenues par les procédés de désasphaltage des résidus sous vide (RSV) issus du raffinage du pétrole, par exemple par un désasphaltage à l'aide d'un solvant en $C_3$ à $C_6$, de préférence au propane. Des procédés de désasphaltage sont bien connus de l'homme du métier et sont décrits par exemple dans FR3014111, US 2004/0069685, US 4,305,812 et US 4,455,216 ou dans Lee et al., 2014, Fuel Processing Technology 119 : 204-210.

Dans Lee et al., 2014, Fuel Processing Technology 119 : 204-210, les résidus issus de la distillation sous vide (RSV) sont séparés selon leur masse moléculaire en présence de solvant $C_3$ à $C_6$ (par exemple le propane). L'huile dite DAO ainsi obtenue est riche en paraffine, présente une très faible teneur en asphaltènes, a une température d'évaporation comprise entre 440°C et 750°C, et une gravité API bien supérieure à celle des résidus sous vide.

La gravité API ou densité API d'une huile (en anglais « API gravity » pour « American Petroleum Institute

gravity ») peut être obtenue à partir de la formule (1) suivante :

$$G_{API} = \frac{141,5}{d} - 131,5$$

avec :

- $G_{API}$, la gravité API de l'huile considérée (exprimée sans unité), et
- d, la densité à 16°C (60°F) de l'huile considérée (exprimée sans unité) en prenant l'eau comme référence.

Les teneurs respectives en composés paraffiniques, naphténiques et aromatiques dépendent dans une certaine mesure de la nature du pétrole brut à l'origine de l'huile DAO et du processus de raffinage utilisé. L'homme du métier sait déterminer les teneurs respectives en composés paraffiniques, naphténiques et aromatiques d'une huile DAO par exemple à l'aide de la méthode de fractionnement SARA également décrite dans Lee et al 2014, Fuel Processing Technology 119 : 204-210 et ainsi sélectionner l'huile DAO appropriée pour la préparation de la composition d'huile gélifiée selon l'invention.

Les teneurs en composés paraffiniques, naphténiques et aromatiques mentionnées dans la présente demande sont déterminées selon la norme ASTM D2140, en % en masse par rapport à la masse de l'huile.

Dans un troisième mode de réalisation de l'invention, l'huile hydrocarbonée d'origine pétrolière est un mélange d'huiles aromatiques telles que décrites ci-dessus et d'huiles paraffiniques telles que décrites ci-dessus.

L'agent plastifiant du liant clair

Par « agent plastifiant du liant clair », on entend au sens de l'invention, un constituant chimique permettant de fluidifier et de réduire la viscosité et le module de la base de liant clair.

Dans un mode de réalisation de l'invention, l'agent plastifiant du liant clair est choisi parmi les huiles d'origine pétrolière, les huiles d'origine végétale et leurs mélanges.

Dans un mode de réalisation préféré de l'invention, les huiles d'origine végétale sont choisies parmi les huiles de colza, de tournesol, de soja, de lin, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coco et de coprah, et leurs mélanges.

De préférence, les huiles d'origine végétale sont choisies parmi les huiles de colza, de tournesol, de lin, de coco, de soja, et leurs mélanges.

Dans un mode de réalisation préféré de l'invention, les huiles utilisées dans la base de liant clair sont choisies parmi les huiles d'origine pétrolière, notamment les huiles aromatiques, ou les huiles paraffiniques, et les huiles d'origine synthétique. Les huiles hydrocarbonées d'origine pétrolière et leurs variantes préférées pour une utilisation comme agent plastifiant du liant clair sont décrites ci-dessus au chapitre « les huiles ».

L'agent structurant du liant clair

Par « agent structurant du liant clair », on entend tout constituant chimique conférant des propriétés mécaniques et une cohésivité satisfaisante à la base de liant clair.

L'agent structurant utilisé dans la base de liant clair est une résine, de préférence choisie parmi les résines d'origine pétrolière hydrocarbonée ou d'origine végétale.

Selon un mode de réalisation, les résines d'origine végétale sont choisies parmi les esters de colophanes tels que les esters méthyliques de colophanes, les esters du glycérol et de colophanes, les esters du pentaérythritol et de colophanes, et leurs mélanges.

Selon un mode de réalisation, les résines d'origine végétale sont obtenues à partir de végétaux et/ou de plantes. Elles peuvent être de récolte, c'est-à-dire récoltées à partir du végétal vivant. Elles peuvent être utilisées telles quelles, on parle alors de résines naturelles ou être transformées chimiquement, on parle alors de résines naturelles modifiées.

Parmi les résines de récolte, on trouve les résines accroïdes, le dammar, les colophanes naturelles, les colophanes modifiées, les esters de colophane et les résinates métalliques. Celles-ci peuvent être prises seules ou en mélange.

Parmi les colophanes naturelles, on peut citer les colophanes de gemme et de bois, en particulier de pin, et/ou de tall oil. Ces colophanes naturelles peuvent être prises seules ou en mélange.

Parmi les colophanes modifiées, on peut citer les colophanes hydrogénées, les colophanes dismutées, les colophanes polymérisées et/ou les colophanes maléisées. Ces colophanes naturelles modifiées peuvent être prises seules ou en mélange, et subir un ou plusieurs traitements de dismutation, polymérisation et/ou maléisation.

Parmi les esters de colophanes, on peut citer les esters méthyliques de colophanes naturelles, les esters méthyliques de colophanes hydrogénées, les esters du glycérol et de colophanes naturelles, les esters du glycérol et de colophanes hydrogénées, les esters du glycérol et de colophanes dismutées, les esters du glycérol et de colophanes polymérisées, les esters du glycérol et de colophanes maléisées, les esters du pentaérythritol et de colophanes naturelles et les esters du pentaérythritol et de colophanes hydrogénées. Ces esters de colophanes peuvent être pris seuls ou en mélange et provenir de colophanes ayant subi un ou plusieurs traitements de dismutation, polymérisation et/ou maléisation.

Les esters du pentaérythritol et de colophanes naturelles et les esters du pentaérythritol et de colophanes hydrogénées sont les esters de colophanes préférés.

Parmi les résinates métalliques, on peut citer les carboxylates métalliques, par exemple de Ca, Zn, Mg, Ba, Pb, Co, obtenus à partir de colophanes naturelles ou de colophanes modifiées. On préfère les résinates de calcium, les résinates de zinc, les résinates mixtes calcium/zinc, pris seuls ou en mélange.

Pour plus d'informations sur les résines d'origine végétale utilisables dans les bases de liants clairs, on peut se référer à l'article K340 de Bernard Delmond publié dans les « Techniques de l'ingénieur ».

De préférence, les résines d'origine végétale ont une température de ramollissement comprise entre 60°C et 200°C, de préférence entre 80°C et 150°C, plus préférentiellement entre 90°C et 110°C.

De préférence, les résines d'origine végétale ont un indice d'acidité compris entre 2 mg et 25 mg, de préférence entre 5 mg et 20 mg, plus préférentiellement entre 6 mg et 16 mg.

Les résines d'origine pétrolière hydrocarbonées sont issues de la copolymérisation de coupes pétrolières aromatiques, aliphatiques, cyclopentadiéniques, prises seules ou en mélange, de préférence issues de coupes pétrolières aromatiques. Par exemple, il peut s'agir d'une résine thermoplastique polycycloaliphatique, par exemple du type homopolymères de cyclopentadiène hydrogénés, à faible masse moléculaire.

Plus particulièrement, la résine hydrocarbonée du type des cyclopentanes a un point de ramollissement (ou température Bille-Anneau, TBA, selon la norme NF T 66-008) supérieur à 125°C, et un indice de couleur Gardner (selon la norme NF T 20-030) égal au maximum à 1.

<u>Le polymère</u>

Le polymère peut entrer dans la composition des bases de liant clair et des bases bitume ou des bases de brai.

Selon un mode de réalisation de l'invention, la base de liant peut comprendre des élastomères connus tels que les copolymères SB (copolymère à blocs du styrène et du butadiène), SBS (copolymère à blocs styrène-butadiène-styrène), SIS (styrène-isoprène-styrène), SBS* (copolymère à blocs styrène-butadiène-styrène en étoile), SBR (styrène-b-butadiène-rubber), EPDM (éthylène propylène diène modifié). Ces élastomères peuvent en outre être réticulés selon tout procédé connu, par exemple avec du soufre. On peut également citer les élastomères réalisés à partir de monomères styrène et de monomères butadiène permettant une réticulation sans agent réticulant tels que décrits dans les documents WO 2007/058994, WO 2008/137394 et par la demanderesse dans la demande de brevet WO 11/013073.

Avantageusement, l'élastomère mis en œuvre dans le procédé de préparation de la base de liant est un copolymère à base de motifs diène conjugué et de motifs hydrocarbure monovinyl aromatique. Le diène conjugué est choisi de préférence parmi ceux comportant de 4 à 8 atomes de carbone par monomère, par exemple le butadiène, le 2-méthyl-1,3-butadiène (isoprène), le 2,3-diméthyl-1,3-butadiène, le 1,3-pentadiène et le 1,2-hexadiène, chloroprène, butadiène carboxylé, isoprène carboxylé, en particulier le butadiène et l'isoprène, et leurs mélanges.

L'hydrocarbure monovinyl aromatique est choisi de préférence parmi le styrène, l'o-méthyl styrène, le p-méthyl styrène, le p-tert-butylstyrène, le 2,3 diméthyl- styrène, p-méthyl styrène, le vinyl naphtalène, le vinyl toluène, le vinyl xylène, et analogues ou leurs mélanges, en particulier le styrène.

Plus particulièrement, le polymère consiste en un ou plusieurs copolymères choisis parmi les copolymères séquencés, de styrène et de butadiène, de styrène et d'isoprène, de styrène et de chloroprène, de styrène et de butadiène carboxylé ou encore de styrène et d'isoprène carboxylé. Un copolymère préféré est un copolymère à base de motifs butadiène et de motifs styrène tel que le copolymère bloc styrène/butadiène SB ou le copolymère bloc styrène/butadiène/styrène SBS.

Le copolymère de styrène et de diène conjugué, en particulier le copolymère de styrène et de butadiène, possède avantageusement une teneur pondérale en styrène allant de 5 à 50%, de préférence de 20 à 50%.

Le copolymère de styrène et de diène conjugué, en particulier le copolymère de styrène et de butadiène, possède avantageusement une teneur pondérale en butadiène (1-2 et 1-4) allant de 50 à 95%. Le copolymère de styrène et de diène conjugué, en particulier le copolymère de styrène et de butadiène, possède avantageusement une teneur pondérale en butadiène 1-2 allant de 5 à 70%, de préférence de 5 à 50%. Les motifs butadiène 1-2 sont les motifs qui résultent de la polymérisation via l'addition 1-2 des motifs butadiène.

La masse moléculaire moyenne en masse du copolymère de styrène et de diène conjugué, et notamment celle du copolymère de styrène et de butadiène, peut être comprise, par exemple, entre 10 000 et 500 000, de préférence

entre 50 000 et 200 000 et plus préférentiellement de 50 000 à 150 000 daltons.

Dans un mode de réalisation spécifique, la base de liant clair ne comprend pas de polymère du type éthylène-acétate de vinyle (EVA) ou du type polyéthylène à basse densité, tel que l'EPDM (éthylène-propylène-diène-monomère) ou EPM (éthylène-propylène monomère).

Les dopes d'adhésivité

Les dopes d'adhésivité peuvent être utilisés dans toutes les bases de liant destinées à être mélangées avec des granulats, pour améliorer l'affinité réciproque entre le liant et les granulats et en assurer la pérennité. Il s'agit par exemple de composés tensioactifs azotés dérivés des acides gras (amines, polyamines, alkyl-polymanne, etc...).

Les agents colorants

Les agents colorants sont destinés à la coloration des bases de liant, en particulier tous les liants dépourvus de composés bitumineux ou de brai, telles que les bases de liant clair. Le liant synthétique clair peut également comprendre un ou plusieurs agents colorants, tels que des pigments minéraux ou des colorants organiques. Les pigments sont sélectionnés suivant la teinte, la couleur souhaitée pour le revêtement. On utilisera par exemple des oxydes métalliques tels que des oxydes de fer, des oxydes de chrome, des oxydes de cobalt, des oxydes de titane pour obtenir les couleurs rouge, jaune, gris, vert bleu ou blanc. Les pigments peuvent être ajoutés, indifféremment dans la base de liant clair ou dans l'enrobé (en mélange avec les granulats par exemple) ou dans une émulsion du liant clair.

Le composé acide

Le composé acide est un composé de formule générale (I) :

$$R\text{-}(COOH)_z \qquad (I)$$

dans laquelle R représente une chaîne linéaire ou ramifiée, saturée ou insaturée comprenant de 4 à 68 atomes de carbone, de préférence de 4 à 54 atomes de carbone, plus préférentiellement de 4 à 36 atomes de carbone et z est un entier variant de 2 à 4.

De préférence, le groupement R est une chaîne linéaire saturée de formule $C_wH_{2w}$ avec w un entier variant de 4 à 22, de préférence de 4 à 12.

Les composés organiques répondant à la formule (I) peuvent être des diacides (z = 2), des triacides (z = 3) ou des tétracides (z = 4). Les composés organiques préférés selon cette variante, sont des diacides avec z = 2.

De préférence, les diacides ont pour formule générale HOOC-$C_wH_{2w}$-COOH avec w un entier variant de 4 à 22, de préférence de 4 à 12 et où z = 2 et R" = $C_wH_{2w}$.

Avantageusement, le composé organique est un diacide choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12. Avantageusement le composé (I) est l'acide sébacique.

Les diacides peuvent aussi être des dimères diacides d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacides d'acide(s) gras insaturé(s) sont classiquement obtenus par réaction de dimérisation intermoléculaire d'au moins un acide gras insaturé (réaction de Diels Alder par exemple). De préférence, on dimérise un seul type d'acide gras insaturé. Ils dérivent en particulier de la dimérisation d'un acide gras insaturé tels que des acides en $C_8$ à $C_{34}$, notamment en $C_{12}$ à $C_{22}$, en particulier en $C_{16}$ à $C_{20}$, et plus particulièrement en $C_{18}$. Un dimère d'acide gras préféré est obtenu par dimérisation de l'acide linoléïque, celui-ci pouvant ensuite être partiellement ou totalement hydrogéné. Un autre dimère d'acide gras préféré a pour formule HOOC-$(CH_2)_7$-CH=CH-$(CH_2)_7$-COOH. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

De préférence le composé de formule (I) est présent dans la composition de liant en quantité allant de 0,1 à 5 % en masse, par rapport à la masse totale de la composition de liant, avantageusement de 0,5 à 4,5 % en masse, encore mieux de 1 à 4% en masse.

Le composé amide

Le composé amide est un composé de formule générale (II) :

$$R'\text{-}(NH)_nCONH\text{-}(X)_m\text{-}(NHCO)_p(NH)_n\text{-}R'' \quad (II)$$

dans laquelle,

- les groupements R' et R", identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S, et R" peut être H ;
- le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S ;
- n, m et p sont des entiers ayant une valeur de 0 ou 1 indépendamment les uns des autres.

Lorsque l'entier m a une valeur de 0, et lorsque l'entier p a une valeur de 1, alors les groupements R'-$(NH)_n$CONH- et -NHCO$(NH)_n$-R" sont liés de façon covalente et forment une liaison hydrazide CONH-NHCO. Le groupement R', ou le groupement R", comprend alors au moins un groupement choisi parmi : une chaîne hydrocarbonée d'au moins 4 atomes de carbone, de préférence comprenant de 4 à 22 atomes de carbone, un cycle aliphatique de 3 à 8 atomes, un système polycyclique condensé aliphatique, partiellement aromatique ou entièrement aromatique, chaque cycle comprenant 5 ou 6 atomes.

Lorsque l'entier m a une valeur de 1, alors le groupement R', et/ou le groupement R" et/ou le groupement X, comprend au moins un groupement choisi parmi : une chaîne hydrocarbonée comprenant de 1 à 22 atomes de carbone, un cycle aliphatique de 3 à 8 atomes, un système polycyclique condensé aliphatique, partiellement aromatique ou entièrement aromatique, chaque cycle comprenant 5 ou 6 atomes.

De préférence, le groupement R' et/ou R" comprend une chaîne hydrocarbonée aliphatique de 4 à 22 atomes de carbone, notamment choisie parmi les groupements $C_4H_9$, $C_5H_{11}$, $C_9H_{19}$, $C_{11}H_{23}$, $C_{12}H_{25}$, $C_{17}H_{35}$, $C_{18}H_{37}$, $C_{21}H_{43}$, $C_{22}H_{45}$.

De préférence, le groupement X représente une chaîne hydrocarbonée linéaire, saturée comprenant de 1 à 22 atomes de carbone, avantageusement X représente une chaîne hydrocarbonée linéaire, saturée comprenant de 1 à 12 atomes de carbone, encore mieux de 1 à 4 atomes de carbone. De préférence, le groupement X est choisi parmi les groupements $C_2H_4$, $C_3H_6$.

Le groupement X peut aussi être un groupement cyclohexyl ou un groupement phényl, les radicaux R'-$(NH)_n$CONH- et -NHCO$(NH)_n$-R" peuvent alors être en position ortho, méta ou para. Par ailleurs, les radicaux R'-$(NH)_n$CONH- et -NHCO$(NH)_n$-R" peuvent être en position cis ou trans l'un par rapport à l'autre. De plus, lorsque le radical X est cyclique, ce cycle peut être substitué par d'autres groupements que les deux groupements principaux R'-$(NH)_n$CONH- et -NHCO$(NH)_n$-R".

De préférence, selon cette variante, le groupement X comprend deux cycles de 6 carbones reliés par un groupement $CH_2$, ces cycles étant aliphatiques ou aromatiques. Dans ce cas, le groupement X est un groupement comportant deux cycles aliphatiques reliés par un groupement $CH_2$ éventuellement substitué comme par exemple :

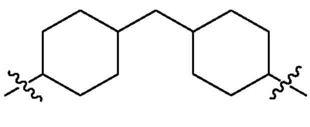,

ou

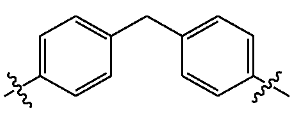

On peut citer comme exemple de cette variante, les dérivés uréides tels que la 4,4'-bis(dodécylaminocarbonylamino)diphénylmethane de formule $C_{12}H_{25}$-NHCONH-$C_6H_4$-$CH_2$-$C_6H_4$-NHCONH-$C_{12}H_{25}$.

De préférence, le composé de formule générale (II) est choisi parmi ceux qui satisfont à la condition n = 0.

De préférence, le composé de formule générale (II) est choisi parmi ceux qui satisfont à la condition : la somme des nombres des atomes de carbone de R', X et R" est supérieure ou égale à 10, avantageusement supérieure ou égale à 14, de préférence supérieure ou égale à 18.

De préférence, le composé de formule générale (II) est choisi parmi ceux qui satisfont à la condition : le nombre des atomes de carbone de l'un au moins de R' et R" est supérieur ou égal à 10, avantageusement supérieur ou égal à 12, de préférence supérieur ou égal à 14.

De préférence, selon une première variante, le composé de formule générale (II) est choisi parmi ceux de formule (IIA) :

$$R'\text{-}CONH\text{-}(X)_m\text{-}NHCO\text{-}R'' \qquad (IIA)$$

dans laquelle R', R", m et X ont la même définition que ci-dessus.

De préférence, dans la formule (IIA) lorsque m= 1, le groupement X représente une chaîne hydrocarbonée linéaire, saturée comprenant de 1 à 22 atomes de carbone, avantageusement X représente une chaîne hydrocarbonée linéaire, saturée comprenant de 1 à 12 atomes de carbone, encore mieux de 1 à 4 atomes de carbone. De préférence, le groupement X est choisi parmi les groupements $C_2H_4$, $C_3H_6$.

De préférence, le composé de formule générale (IIA) est choisi parmi ceux qui satisfont à la condition : la somme des nombres des atomes de carbone de R', X et R" est supérieure ou égale à 10, avantageusement supérieure ou égale à 14, de préférence supérieure ou égale à 18.

De préférence, le composé de formule générale (IIA) est choisi parmi ceux qui satisfont à la condition : le nombre des atomes de carbone de l'un au moins de R' et R" est supérieur ou égal à 10, avantageusement supérieur ou égal à 12, de préférence supérieur ou égal à 14.

De préférence, selon une seconde variante, le composé de formule générale (II) est choisi parmi ceux de formule (IIB) :

$$R'\text{-}CONH\text{-}R'' \qquad (IIB)$$

dans laquelle R' et R" ont la même définition que ci-dessus.

Avantageusement, selon cette variante, la somme des nombres des atomes de carbone de R' et R" est supérieure ou égale à 10, avantageusement supérieure ou égale à 14, de préférence supérieure ou égale à 18.

Encore plus avantageusement, selon cette variante, le nombre des atomes de carbone de R' est supérieur ou égal à 10, avantageusement supérieur ou égal à 12, de préférence supérieur ou égal à 14, et R" = H.

Avantageusement, le composé de formule générale (II) est choisi parmi les dérivés hydrazides tels que les composés $C_5H_{11}$-CONH-NHCO-$C_5H_{11}$, $C_9H_{19}$-CONH-NHCO-$C_9H_{19}$, $C_{11}H_{23}$-CONH-NHCO-$C_{11}H_{23}$, $C_{17}H_{35}$-CONH-NHCO-$C_{17}H_{35}$, ou $C_{21}H_{43}$-CONH-NHCO-$C_{21}H_{43}$ ; les diamides telles que le N,N'-éthylènedi(laurylamide) de formule $C_{11}H_{23}$-CONH-$CH_2$-$CH_2$-NHCO-$C_{11}H_{31}$, le N,N'-éthylènedi(myristylamide) de formule $C_{13}H_{27}$-CONH-$CH_2$-$CH_2$-NHCO-$C_{13}H_{27}$, le N,N'-éthylènedi(palmitamide) de formule $C_{15}H_{31}$-CONH-$CH_2$-$CH_2$-NHCO-$C_{15}H_{31}$, leN,N'-éthylènedi(stéaramide) de formule $C_{17}H_{35}$-CONH-$CH_2$-$CH_2$-NHCO-$C_{17}H_{35}$ ; les mono amides telles que le laurylamide de formule $C_{11}H_{23}$-$CONH_2$, le myristylamide de formule $C_{13}H_{27}$-$CONH_2$, le palmitamide de formule $C_{15}H_{31}$-$CONH_2$, le stéaramide de formule $C_{17}H_{35}$-$CONH_2$.

De façon encore plus avantageuse, le composé de formule générale (II) est le N,N'-éthylènedi(stéaramide) de formule $C_{17}H_{35}$-CONH-$CH_2$-$CH_2$-NHCO-$C_{17}H_{35}$.

De préférence le composé de formule (II) est présent dans la composition de liant en quantité allant de 0,1 à 5 % en masse, par rapport à la masse totale de la composition de liant, avantageusement de 0,5 à 4,5 % en masse, encore mieux de 1 à 4% en masse.

Composition de liant

Selon l'invention, le ratio massique des composés (I) et (II) dans la composition de liant est de 10 : 1 à 1 : 16.

Avantageusement, le ratio massique des composés (I) et (II) est de 5 : 1 à 1 : 9.

Selon un premier mode de réalisation de l'invention, la somme des masses des additifs de formule (I) et de formule (II) représente de 0,5% à 12% en masse, de préférence de 1% à 8% en masse, plus préférentiellement de 1,2% à 5% en masse par rapport à la masse totale de la composition de liant.

Selon un autre mode de réalisation de l'invention, la composition de liant additivée selon l'invention est une composition de liant concentrée. Dans ce cas, avant sa mise en œuvre, par exemple dans une application décrite ci-dessous, la composition de liant additivée concentrée est fondue puis diluée avec au moins une autre composition de liant non additivée. Cette dilution est calculée pour atteindre une teneur en additif, soit une somme des masses des

additifs (I) et (II), qui représente de 0,5% à 12% en masse, de préférence de 1% à 8% en masse, plus préférentiellement de 1,2% à 5% en masse, par rapport à la masse totale de la composition de liant.

Selon ce mode de réalisation, la somme des masses des additifs de formule (I) et de formule (II) représente de 5% à 30% en masse, de préférence de 6% à 28% en masse, plus préférentiellement de 7% à 26% en masse par rapport à la masse totale de ladite composition de liant concentrée.

De préférence, la composition de liant comprend en outre entre 0,5% et 20% en masse, de préférence entre 2% et 20% en masse, plus préférentiellement entre 4% et 15% en masse d'au moins un agent anti-agglomérant par rapport à la masse totale de la composition de liant.

Les compositions de liant sont préparées à partir d'au moins une base de liant, lesdites compositions étant préparées en mettant en contact :

- au moins une base de liant choisie parmi les bases bitume, les bases de brais, les liants clairs ou leurs mélanges,
- entre 0,1% et 5% en masse, de préférence entre 0,5% et 4,5% en masse, plus préférentiellement entre 1% et 4% en masse d'un additif (I) par rapport à la masse totale de la composition de liant,
- entre 0,1% et 5% en masse, de préférence entre 0,5% et 4,5% en masse, plus préférentiellement entre 0,5% et 4% en masse d'au moins un additif (II) par rapport à la masse totale de la composition de liant,
- éventuellement entre 0,5% et 20% en masse, de préférence entre 2% et 20% en masse, plus préférentiellement entre 4% et 15% en masse d'au moins un agent anti-agglomérant par rapport à la masse totale de la composition de liant,
- le ratio massique des composés (I) et (II) étant de 10 : 1 à 1 : 16.

Avantageusement, la composition de liant comprend, ou est essentiellement constituée de :

◦ de 99,8 à 90% en masse d'au moins une base de liant choisie les bases bitume, les bases de brais, les liants clairs ou leurs mélanges,
◦ de 0,1 à 5 % en masse, par rapport à la masse totale de la composition de liant, d'au moins un additif (I),
◦ de 0,1 à 5 % en masse, par rapport à la masse totale de la composition de liant, d'au moins un additif (II),
et le ratio massique des composés (I) et (II) dans la composition de liant est de 10 : 1 à 1 : 16.

Encore plus avantageusement, la composition de liant comprend, ou est essentiellement constituée de :

◦ de 99 à 91% en masse d'au moins une base de liant choisie parmi les bases bitume, les bases de brais, les liants clairs ou leurs mélanges,
◦ de 0,5 à 4,5 % en masse, par rapport à la masse totale de la composition de liant, d'au moins un additif (I),
◦ de 0,5 à 4,5 % en masse, par rapport à la masse totale de la composition de liant, d'au moins un additif (II),
et le ratio massique des composés (I) et (II) dans la composition de liant est de 5 : 1 à 1 : 9.

Selon un mode de réalisation, la composition de liant comprend, ou est essentiellement constituée de :

◦ 99,3 à 70 % en masse d'au moins une base de liant choisie parmi les bases bitume, les bases de brais, les liants clairs ou leurs mélanges,
◦ de 0,1% à 5% en masse, par rapport à la masse totale de la composition de liant, d'au moins un additif (I),
◦ de 0,1% à 5 % en masse, par rapport à la masse totale de la composition de liant, d'au moins un additif (II),
◦ de 0,5% à 20% en masse, de préférence de 2% à 20% en masse, plus préférentiellement de 4% à 15% en masse d'au moins un agent anti-agglomérant par rapport à la masse totale de la composition de liant,
et le ratio massique des composés (I) et (II) dans la composition de liant est de 10 : 1 à 1 : 16.

De façon avantageuse, la composition de liant est sous forme solide à froid et divisée, comme par exemple sous forme de granules ou de pains de liant.

<u>Le composé anti-agglomérant</u>

De façon optionnelle, comme exposé ci-dessus, la composition de liant peut comprendre un ou plusieurs composés anti-agglomérants.

Selon un autre mode de réalisation, de façon optionnelle, la composition de liant lorsqu'elle est sous forme divisée solide à froid, comme par exemple sous forme de granules ou de pains de liant, peut être partiellement enrobée d'un ou plusieurs composés anti-agglomérants.

Le composé anti-agglomérant est d'origine minérale ou organique. Par « anti-agglomérant » ou « composé

anti-agglomérant », on entend tout composé qui limite, réduit, inhibe, retarde, l'agglomération et/ou l'adhésion des granules entre eux lors de leur transport et/ou de leur stockage à température ambiante et qui assure leur fluidité lors de leur manipulation.

Plus préférentiellement, le composé anti-agglomérant est choisi parmi : le talc ; les fines, également appelées "fillers", généralement de diamètre inférieur à 125 µm, telles que les fines silicieuses, à l'exception des fines calcaires ; les ultrafines ; le sable tel que le sable de fontainebleau ; le ciment ; les cementitious tels que les cendres volantes, les laitiers de haut fourneau ; le carbone ; les résidus de bois tels que la lignine, le lignosulfonate, les poudres d'aiguilles de conifères, les poudres de cônes de conifères, notamment de pin ; les cendres de balles de riz ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les autres oxydes de silicium ; les fumées de silice, notamment les fumées de silice hydrophile ou hydrophobe ; les silices pyrogénées, notamment les silices pyrogénées hydrophobes ou hydrophiles ; les agents colorants ; la poudre de matière plastique ; la chaux ; le plâtre ; la poudrette de caoutchouc ; la poudre de polymères, tels que les copolymères styrène-butadiène (SB), les copolymères styrène-butadiène-styrène (SBS) et les mélanges de ces matériaux.

Avantageusement, le composé anti-agglomérant est choisi parmi : les fines, généralement de diamètre inférieur à 125 µm ; les résidus de bois tels que la lignine, les poudres d'aiguilles de conifères et les poudres de cônes de conifères ; les fumées de silice, notamment les fumées de silice hydrophile ou hydrophobe ; les silices pyrogénées, notamment les silices pyrogénées hydrophobes ou hydrophiles ; leurs mélanges.

De préférence, le composé anti-agglomérant est choisi parmi les fumées de silice.

En particulier, lorsque la composition de liant comprend au moins un composé anti-agglomérant, il est de préférence choisi parmi les fumées de silice.

Lorsque la composition de liant sous forme divisée solide à froid est enrobée par au moins un composé anti-agglomérant, ledit composé anti-agglomérant est également choisi de préférence parmi les fumées de silices.

Selon un mode de réalisation, la composition de liant clair sous forme divisée solide à froid selon l'invention comprend un composé anti-agglomérant, de préférence choisi parmi les fumées de silices, et est enrobée par au moins un composé anti-agglomérant, de préférence choisi parmi les fumées de silice.

Au sens de l'invention, les composés « fumée de silice », et « silice pyrogénée » ont la même définition chimique et sont enregistrés sous le même numéro CAS 112 945-52-5. Par conséquent, au sens de l'invention on peut employer ces composés indifféremment l'un de l'autre

Par « silice pyrogénée », on entend, soit une silice pyrogénée, soit un dérivé de silice pyrogénée.

Par « silice pyrogénée », on entend un composé obtenu par l'hydrolyse en phase vapeur de chlorosilanes tels que le tétrachlorure de silicium, dans une flamme d'oxygène et d'hydrogène. De tels procédés sont généralement désignés comme des procédés pyrogènes dont la réaction globale est : $SiCl_4 + H_2 + O_2 \rightarrow SiO_2 + 4\ HCl$.

Les silices pyrogénées se distinguent des autres dioxydes de silicium en ce qu'elles présentent une structure amorphe. De haute pureté (> 99,8 % en silice), elles présentent un faible caractère hydrophile (pas de microporosité).

De préférence, le composé de silice pyrogénée est la silice pyrogénée.

Selon un mode de réalisation de l'invention, le composé de silice pyrogénée présente une surface spécifique comprise entre 25 et 420 $m^2/g$, préférentiellement entre 90 et 330 $m^2/g$, plus préférentiellement entre 120 et 280 $m^2/g$.

La surface spécifique de la silice pyrogénée définie en $m^2/g$ communément appelée « aire de surface » ou « SA » est mesurée selon la méthode de S. Brunauer, PH Emmet et I. Teller, J. Am. Chemical Society, 60: 309 (1938) (BET).

Selon un mode de réalisation de l'invention, le composé de silice pyrogénée présente une taille moyenne de particules comprise entre 5 et 50 nm.

Selon un mode de réalisation de l'invention, le composé de silice pyrogénée présente un pH compris entre 3 et 10 lorsqu'il est en phase aqueuse.

Selon un mode de réalisation de l'invention, le composé de silice pyrogénée présente une teneur de carbone comprise entre 0,1 et 10% en poids par rapport au poids total du composé de silice pyrogénée.

Selon un mode de réalisation de l'invention, le composé de silice pyrogénée est choisi parmi un composé de silice pyrogénée hydrophile, un composé de silice pyrogénée hydrophobe et leurs mélanges.

De préférence, le composé de silice pyrogénée est un composé de silice pyrogénée hydrophile.

Par « hydrophile », on entend un composé qui est miscible avec l'eau en toutes proportions.

Le composé de silice pyrogénée, ou dérivé de silice pyrogénée, utilisé au sens de l'invention peut être chimiquement modifié.

Différents types de composés de silice pyrogénée sont décrits dans les demandes de brevets suivants et peuvent être utilisés dans la présente invention :

- des silices pyrogénées silanisées, comme décrit dans WO 2004/020532, ou dans WO 2007/128636,
- des silices pyrogénées hydrophiles, comme décrit dans WO 2009/071467, WO 2011/000133 déposées au nom de

Degussa AG ou Degussa Gmbh,

- des fumées de silice rendues hydrophobes par un traitement au moyen de polysiloxanes comme décrit dans WO 2008/141932, ou par silanisation comme décrit dans WO 2008/141930,
- des silices dopées par de l'oxyde de potassium comme décrit dans WO 2008/043635, WO 2008/022836,
- des silices sous forme d'agrégats de particules primaires comme décrit dans WO 2009/015969 déposé au nom de Evonik Degussa Gmbh ou dans WO 2010/028261 déposé au nom de Cabot Corporation.

Lorsque la composition de liant sous forme divisée solide à froid est enrobée par au moins un composé de silice pyrogénée, ce dernier peut alors être mis en œuvre seul ou sous la forme d'un mélange au sein d'une composition de revêtement.

Qu'il soit mis en œuvre seul ou en mélange dans une composition de revêtement, le composé de silice pyrogénée peut être mis en œuvre dans le procédé selon l'invention sous la forme d'une poudre ou en dispersion dans un solvant qui s'évapore après application.

De préférence, lorsque la composition de revêtement comprend au moins un composé de silice pyrogénée et au moins un solvant, la composition de revêtement comprend de 5 à 70% en poids de composé de silice pyrogénée par rapport au poids total de la composition de revêtement, plus préférentiellement de 20 à 40% en poids.

De préférence, le solvant est un solvant organique ou de l'eau. Par solvant organique, on entend tout solvant non miscible avec un bitume, tel qu'un alcool, par exemple l'éthanol.

Les fumées de silice utilisées dans l'invention sont commercialement disponibles et par exemple peuvent être vendus par Evonik Degussa sous la marque AEROSIL®, comme par exemple l'AEROSIL®200, par Cabot Corporation sous les marques CAB-O-SIL® et CAB-O-SPERSE® ou encore par Wacker Chemie AG sous la marque HDK®.

De préférence, la masse de l'anti-agglomérant recouvrant au moins une partie de la surface des granules ou des pains de liant est comprise entre 0,2% et 10% en masse, de préférence entre 0,5% et 8% en masse, plus préférentiellement entre 0,5% et 5% par rapport à la masse totale de liant desdits granules ou desdits pains.

Avantageusement, la masse de l'anti-agglomérant recouvrant au moins une partie de la surface des granules ou des pains de liant est d'environ 1% en masse par rapport à la masse totale de liant desdits granules ou desdits pains.

La couche d'anti-agglomérant recouvrant les granules ou les pains de liant est, de préférence, continue de façon à ce qu'au moins 90% de la surface du granule ou du pain de liant est recouverte d'au moins un anti-agglomérant, de préférence au moins 95%, plus préférentiellement au moins 99%.

L'épaisseur moyenne de la couche d'anti-agglomérant est, de préférence, supérieure ou égale à 20 $\mu$m, plus préférentiellement comprise entre 20 et 100 $\mu$m. La couche d'anti-agglomérant doit être suffisamment épaisse pour que celle-ci soit continue.

Les granules ou les pains de liant sont recouverts de l'anti-agglomérant selon tout procédé connu, par exemple selon le procédé décrit dans le document US 3 026 568.

Adjuvant polymère oléfinique

Selon un mode de réalisation de l'invention, la composition de liant additivée peut en outre comprendre au moins un adjuvant polymère oléfinique.

L'adjuvant polymère oléfinique est choisi, de préférence, dans le groupe consistant en (a) les copolymères éthylène/(méth)acrylate de glycidyle ; (b) les terpolymères éthylène/monomère A/monomère B et (c) les copolymères résultant du greffage d'un monomère B sur un substrat polymère.

(a) Les copolymères éthylène/(méth)acrylate de glycidyle sont, avantageusement, choisis parmi les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement de 60% à 90% en masse d'éthylène.

(b) Les terpolymères sont, avantageusement, choisis parmi les terpolymères statistiques ou séquencés, de préférence statistiques, d'éthylène, d'un monomère A et d'un monomère B.

Le monomère A est choisi parmi l'acétate de vinyle et les acrylates ou méthacrylates d'alkyle en $C_1$ à $C_6$.

Le monomère B est choisi parmi l'acrylate de glycidyle et le méthacrylate de glycidyle.

Les terpolymères éthylène/monomère A/monomère B comprennent de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

(c) Les copolymères résultent du greffage d'un monomère B choisi parmi l'acrylate de glycidyle et le méthacrylate de glycidyle, sur un substrat polymère. Le substrat polymère consiste en un polymère choisi parmi les polyéthylènes,

notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en $C_1$ à $C_6$, comprenant de 40% à 99,7% en masse, de préférence de 50% à 99% en masse d'éthylène. Lesdits copolymères greffés comprennent de 0,5% à 15% en masse, de préférence de 2,5% à 15% en masse de motifs greffés issus du monomère B.

Avantageusement, l'adjuvant polymère oléfinique est choisi parmi les terpolymères statistiques d'éthylène (b), d'un monomère A choisi parmi les acrylates ou méthacrylates d'alkyle en $C_1$ à $C_6$ et d'un monomère B choisi parmi l'acrylate de glycidyle et le méthacrylate de glycidyle, comprenant de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

Granules de liant

Le terme « granules de liant » peut également être défini comme un liant solide à température ambiante conditionné sous une forme divisée, c'est-à-dire sous forme d'unités de petite taille nommées granules ou particules.

Les granules de liant sont obtenus par mise en forme d'une composition de liant telle que décrite ci-dessus selon tout procédé connu, par exemple selon le procédé de fabrication décrit dans le document US 3,026,568, le document US 4,279,579, le document WO 2009/153324 ou le document WO 2012/168380. Selon un mode de réalisation particulier, la mise en forme des granules peut être réalisée par égouttage, en particulier à l'aide d'un tambour.

D'autres techniques peuvent être utilisées dans le procédé de fabrication des granules de liant, en particulier le moulage, l'extrusion ou la granulation.

De préférence, les granules de liant peuvent avoir au sein d'une même population de granules, une ou plusieurs formes choisies parmi une forme cylindrique, sphérique ou ovoïde. La taille des granules de liant est telle que la dimension moyenne la plus longue est de préférence inférieure ou égale à 50 mm, plus préférentiellement de 3 à 30 mm, encore plus préférentiellement comprise de 4 à 20 mm. La taille et la forme des granules de liant peuvent varier selon le procédé de fabrication employé. Par exemple, l'utilisation d'une filière permet de contrôler la fabrication de granules d'une taille choisie. Un tamisage permet de sélectionner des granules en fonction de leur taille.

De préférence, les granules de liant présentent un poids compris entre 0,1 g et 50 g, de préférence entre 0,2 g et 10 g, plus préférentiellement entre 0,2 g et 5 g.

Les granules de liant sont, de préférence, transportés et/ou du stockés en vrac dans des sacs de 0,5 g à 30 kg ou de 500 kg à 1000 kg couramment appelés dans le domaine des liants routiers des « Big Bag », lesdits sacs étant de préférence en matériau thermofusible ou dans des cartons de 5 kg à 30 kg ou dans des fûts de 100 kg à 200 kg.

Selon un autre mode de réalisation de l'invention, la taille des granules de liant est telle que la dimension moyenne la plus longue est de préférence inférieure à 20 mm, plus préférentiellement inférieure à 10 mm, encore plus préférentiellement inférieure à 5 mm.

Selon un mode de réalisation de l'invention, les granules de liant sont recouverts sur au moins une partie de leur surface d'un anti-agglomérant tel que décrit ci-dessus, de préférence sur l'ensemble de leur surface.

Selon un mode de réalisation de l'invention, les granules de liant sont recouverts sur au moins une partie de leur surface d'un agent colorant tel que décrit ci-dessus comme par exemple un pigment, de préférence sur l'ensemble de leur surface.

Selon un mode de réalisation de l'invention, l'anti-agglomérant et/ou l'agent colorant compris dans le liant formant les granules de liant peut être identique ou différent de l'anti-agglomérant et/ou de l'agent colorant recouvrant au moins une partie de la surface desdites granules de liant.

Granules de liant à structure cœur/enveloppe

Selon un mode de réalisation de l'invention, les granules de liant comprennent un cœur et une couche de revêtement dans lequel :

- le cœur comprend au moins une composition de liant telle que définie ci-dessus et,
- la couche de revêtement comprend au moins un composé viscosifiant et au moins un composé anti-agglomérant tel que défini ci-dessus.

Par « couche de revêtement », on entend que la couche de revêtement recouvre au moins 90% de la surface du cœur, de préférence au moins 95% de la surface du cœur, plus préférentiellement au moins 99% de la surface du cœur.

On utilise indifféremment dans la description les expressions « composition d'enrobage » et « composition de revêtement ».

Par « viscosifiant » ou « composé viscosifiant », on entend un composé qui a la propriété de diminuer la fluidité d'un liquide ou d'une composition et donc d'en augmenter la viscosité.

Les termes « viscosifiant » et « composé viscosifiant » sont utilisés au sens de l'invention, de manière équivalente et indépendamment l'un de l'autre.

Le viscosifiant au sens de l'invention est un matériau qui présente une viscosité dynamique supérieure ou égale à 50 $mPa.s^{-1}$, de préférence de 50 $mPa.s^{-1}$ à 550 $mPa.s^{-1}$, plus préférentiellement de 80 $mPa.s^{-1}$ à 450 $mPa.s^{-1}$, la viscosité étant une viscosité Brookfield mesurée à 65°C. La viscosité d'un viscosifiant selon l'invention est mesurée à 65°C au moyen d'un viscosimètre Brookfield CAP 2000+ et à une vitesse de rotation de 750 tr/min. La lecture de la mesure est réalisée après 30 secondes pour chaque température.

De préférence, le viscosifiant est choisi parmi :

- les composés gélifiants de préférence d'origine végétale ou animale, tels que : la gélatine, le chitosane, le chitosane modifié, l'agar-agar, les alginates, les dérivés de cellulose, les amidons, les amidons modifiés, ou les gommes gellanes ;
- les polyéthylène glycols (PEG) tels que les PEG ayant un poids moléculaire compris entre 800 $g.mol^{-1}$ et 8000 $g.mol^{-1}$, comme par exemple un PEG ayant un poids moléculaire de 800 $g.mol^{-1}$ (PEG-800), un PEG ayant un poids moléculaire de 1000 $g.mol^{-1}$ (PEG-1000), un PEG ayant un poids moléculaire de 1500 $g.mol^{-1}$ (PEG-1500), un PEG ayant un poids moléculaire de 4000 $g.mol^{-1}$ (PEG-4000) ou un PEG ayant un poids moléculaire de 6000 $g.mol^{-1}$ (PEG-6000);
- les silicones ;
- les mélanges de tels composés.

Avantageusement, le viscosifiant est choisi parmi :

- les composés gélifiants de préférence d'origine végétale ou animale, tels que : la gélatine, l'agar-agar, les alginates, les dérivés de cellulose ou les gommes gellanes ;
- les polyéthylène glycols (PEG) tels que les PEG ayant un poids moléculaire compris entre 800 $g.mol^{-1}$ et 8000 $g.mol^{-1}$, comme par exemple un PEG ayant un poids moléculaire de 800 $g.mol^{-1}$ (PEG-800), un PEG ayant un poids moléculaire de 1000 $g.mol^{-1}$ (PEG-1000), un PEG ayant un poids moléculaire de 1500 $g.mol^{-1}$ (PEG-1500), un PEG ayant un poids moléculaire de 4000 $g.mol^{-1}$ (PEG-4000) ou un PEG ayant un poids moléculaire de 6000 $g.mol^{-1}$ (PEG-6000);
- les silicones ;
- les mélanges de tels composés.

Selon un mode de réalisation de l'invention, la couche de revêtement est obtenue par application d'une composition comprenant au moins un composé viscosifiant et au moins un composé anti-agglomérant sur tout ou partie de la surface du cœur de la composition de liant solide.

De préférence, la couche de revêtement est solide à température ambiante, y compris à température ambiante élevée.

De préférence, la composition comprenant au moins un composé viscosifiant et au moins un composé anti-agglomérant présente une viscosité supérieure ou égale à 200 $mPa.s^{-1}$, de préférence comprise entre 200 $mPa.s^{-1}$ et 700 $mPa.s^{-1}$, la viscosité étant une viscosité Brookfield.

Préférentiellement, la couche de revêtement comprend au moins 10% en masse d'au moins un composé viscosifiant par rapport à la masse totale de la couche de revêtement, de préférence de 10 à 90 % en masse, plus préférentiellement de 10 à 85% en masse.

Avantageusement, lorsque le vicosifiant est un gélifiant, comme par exemple de la gélatine, la couche de revêtement comprend de 10 à 90 % en masse de composé viscosifiant par rapport à la masse totale de la couche de revêtement, de préférence de 15 à 85%, encore mieux de 15 à 60%.

Avantageusement, lorsque le vicosifiant est un gélifiant, comme par exemple de la gélatine, la couche de revêtement comprend de 10 à 90 % en masse de composé anti-agglomérant par rapport à la masse totale de la couche de revêtement, de préférence de 15 à 85%, encore mieux de 40 à 85%.

Avantageusement, lorsque le vicosifiant est un PEG, comme par exemple un PEG ayant un poids moléculaire compris entre 800 $g.mol^{-1}$ et 8000 $g.mol^{-1}$, la couche de revêtement comprend de 10 à 90 % en masse de composé viscosifiant par rapport à la masse totale de la couche de revêtement, de préférence de 40 à 90%, encore mieux de 60 à 90%.

Avantageusement, lorsque le vicosifiant est un PEG, comme par exemple un PEG ayant un poids moléculaire compris entre 800 $g.mol^{-1}$ et 8000 $g.mol^{-1}$, la couche de revêtement comprend de 10 à 90 % en masse de composé anti-agglomérant par rapport à la masse totale de la couche de revêtement, de préférence de 10 à 60%, encore mieux

de 10 à 40%.

Préférentiellement, la couche de revêtement comprend au moins 10% en masse d'un composé anti-agglomérant par rapport à la masse totale de la couche de revêtement, de préférence de 10 à 90% en masse, encore plus préférentiellement de 15 à 90 % en masse.

De préférence, la couche de revêtement représente au moins 5% en masse par rapport à la masse totale du granule, de préférence de 10 à 60% en masse, plus préférentiellement de 10 à 50%.

Avantageusement, le composé viscosifiant et le composé anti-agglomérant représentent au moins 90% en masse par rapport à la masse totale de la couche de revêtement, encore mieux au moins 95% en masse et avantageusement au moins 98% en masse.

Selon un mode de réalisation préféré, la couche de revêtement est essentiellement constituée du composé viscosifiant et du composé anti-agglomérant.

Outre le composé viscosifiant et le composé anti-agglomérant, la couche de revêtement peut éventuellement comprendre un ou plusieurs composés choisis parmi : les additifs chimiques, les polymères, ...

Selon un mode de réalisation de l'invention préféré, les granules de liant présentent :

- un cœur comprenant au moins une composition de liant telle que définie ci-dessus et,
- une couche de revêtement comprenant de la gélatine ou un PEG et au moins un composé anti-agglomérant choisi parmi les fines généralement de diamètre inférieur à 125 μm ; les résidus de bois tels que la lignine, les poudres d'aiguilles de conifères et les poudres de cônes de conifères ; la poudrette de caoutchouc ; la poudre de copolymères SBS ; les fumées de silice, notamment les fumées de silice hydrophile ou hydrophobe ; les silices pyrogénées, notamment les silices pyrogénées hydrophobes ou hydrophiles ; et leurs mélanges.

De manière encore préférée, les granules de liant présentent :

- un cœur comprenant au moins une composition de liant telle que définie ci-dessus et,
- une couche de revêtement comprenant de la gélatine ou un PEG et au moins un composé anti-agglomérant choisi parmi les fines généralement de diamètre inférieur à 125 μm ; la lignine ; la poudrette de caoutchouc ; les fumées de silice, notamment les fumées de silice hydrophile ou hydrophobe ; les silices pyrogénées, notamment les silices pyrogénées hydrophobes ou hydrophiles ; la poudre de copolymères SBS.

Selon un mode de réalisation encore préféré, les granules de liant sont essentiellement constitués de :

- un cœur constitué d'une composition de liant telle que définie ci-dessus et,
- une couche de revêtement constituée d'un mélange de gélatine ou d'un PEG, avec au moins un composé anti-agglomérant choisi parmi les fines généralement de diamètre inférieur à 125 μm ; la lignine ; la poudrette de caoutchouc ; la poudre de copolymères SBS ; les fumées de silice, notamment les fumées de silice hydrophile ou hydrophobe ; les silices pyrogénées, notamment les silices pyrogénées hydrophobes ou hydrophiles.

Préférentiellement, les granules de liant sont essentiellement constitués de :

- un cœur constitué d'une composition de liant telle que définie ci-dessus comprenant un additif chimique (I) tel que défini ci-dessus et un additif chimique (II) tel que défini ci-dessus, et
- une couche de revêtement constituée d'un mélange de gélatine ou d'un PEG, avec au moins un composé anti-agglomérant choisi parmi les fines généralement de diamètre inférieur à 125 μm ; la lignine ; la poudrette de caoutchouc ; la poudre de copolymères SBS ; les fumées de silice ; les silices pyrogénées, notamment les silices pyrogénées hydrophobes ou hydrophiles.

Selon un mode de réalisation de l'invention, les granules de liant comprennent un cœur et une couche de revêtement dans lequel :

- le cœur comprend au moins une composition de liant telle que définie ci-dessus et,
- la couche de revêtement comprend au moins une huile telle que définie ci-dessus.

Avantageusement dans ce mode de réalisation, la composition de revêtement comprend au moins un composé organogélateur et le cas échéant d'autres additifs. Les autres additifs peuvent être choisi par exemple parmi : des composés anti-agglomérants, des dopes d'adhésivités, des élastomères pour bitume, etc.

Plus avantageusement, la composition de revêtement comprend au moins un composé organogélateur choisi parmi les composés de formule (I) tels que défini ci-dessus, les composés de formule (II) tels que défini ci-dessus et

les composés de formule (III) tels que définis ci-dessous.

Le composé organogélateur de formule (III) est un composé :

$$(R\text{-}NHCO)_x\text{-}Z\text{-}(NHCO\text{-}R')_y \qquad (III),$$

dans laquelle,

- R et R', identiques ou différents, représentent une chaîne hydrocarbonée saturée ou insaturée, linéaire, ramifiée ou cyclique comprenant de 1 à 22 atomes de carbone, éventuellement substituée, et comprenant éventuellement des hétéroatomes tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S,
- Z représente un groupement tri-fonctionnalisé choisi parmi les groupements suivants :

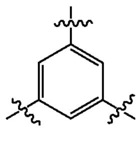
$Z_1$

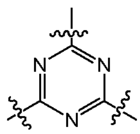
$Z_2$

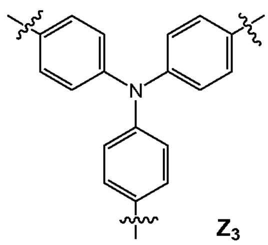
$Z_3$

- x et y sont des entiers différents de valeur variant de 0 à 3 et tels que x+y=3. De préférence, lorsque x est égal à 0 et Z représente $Z_2$, le composé de formule (III) est la N2, N4, N6-tridécylmélamine ayant la formule suivante avec R' représentant le groupe $C_9H_{19}$ :

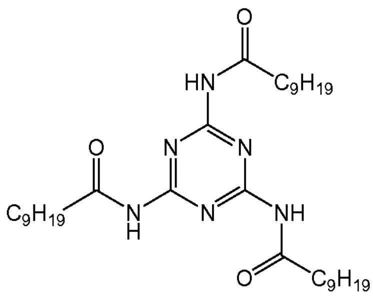

D'autres composés préférés répondant à la formule (III), sont tels que x est égal à 0, Z représente $Z_2$ et R' représente une chaîne hydrocarbonée saturée, linéaire, de 1 à 22 atomes de carbone, de préférence de 2 à 18 atomes de carbone, de préférence de 5 à 12 atomes de carbone.

D'autres composés préférés répondant à la formule (III) sont tels que : y est égal à 0 et Z représente $Z_1$, les composés ont alors pour formule :

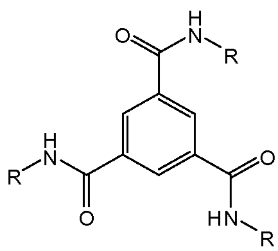

avec R choisi parmi les groupes suivants, pris seuls ou en mélanges :

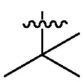 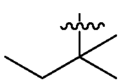 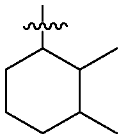 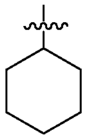 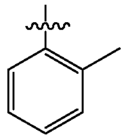

D'autres composés préférés répondant à la formule (III) sont tels que : y est égal à 0, Z représente $Z_1$ et R représente une chaîne hydrocarbonée saturée, linéaire, de 1 à 22 atomes de carbone, de préférence de 8 à 12 atomes de carbone.

De préférence, la composition de revêtement comprend au moins un composé organogélateur de formule (I), (II) ou (III), choisi parmi :

- le 2',3-bis[(3-[3, 5-di-*tert*-butyl-4-hydroxyphenyl]propionyl)]propiono-hydrazide,
- le N,N'-éthylènedi(stéaramide) de formule $C_{17}H_{35}$-CONH-$CH_2$-$CH_2$-NHCO-$C_{17}H_{35}$,
- l'acide sébacique,
  et
- les mélanges de ces composés.

Avantageusement, la composition de revêtement comprend de 0,1 % à 10 % en masse, de préférence de 0,2 % à 5 % en masse, plus préférentiellement de 0,5 % à 3,5 % en masse d'un composé organogélateur par rapport à la masse totale de la composition de revêtement.

Avantageusement, la composition de revêtement comprend, ou est essentiellement composée de :

- 80 % à 99,9 % en masse d'au moins une huile choisie parmi : les huiles hydrocarbonées d'origine pétrolière ou de synthèse avantageusement parmi les huiles hydrocarbonées d'origine pétrolière,
- 0,1 % à 10 % en masse, d'au moins un composé organogélateur,
- 0 % à 10 % en masse d'un ou plusieurs autres additifs,
  par rapport à la masse totale de la composition.

De préférence, la composition de revêtement comprend, ou est essentiellement composée de :

- 85 % à 99,8 % en masse d'au moins une huile, choisie parmi : les huiles hydrocarbonées d'origine pétrolière ou de synthèse, avantageusement parmi les huiles hydrocarbonées d'origine pétrolière,
- 0,2 % à 5 % en masse, d'au moins un composé organogélateur,
- 0 % à 10 % en masse d'un ou plusieurs autres additifs,
  par rapport à la masse totale de la composition.

Plus préférentiellement, la composition de revêtement comprend, ou est essentiellement composée de :

- 86,5 % à 99,5 % en masse d'au moins une huile choisie parmi : les huiles hydrocarbonées d'origine pétrolière ou de synthèse, avantageusement parmi les huiles hydrocarbonées d'origine pétrolière,
- 0,5 % à 3,5 % en masse d'au moins un composé organogélateur,
- 0 % à 10 % en masse d'un ou plusieurs autres additifs par rapport à la masse totale de la composition.

Selon un mode de réalisation de l'invention, les granules de liant peuvent comprendre en outre une ou plusieurs autres couches d'enrobage, à base d'anti-agglomérant recouvrant tout ou en partie la couche de revêtement du liant solide à froid selon l'invention.

<u>Pain de liant</u>

Selon un mode de réalisation de l'invention, la composition de liant solide à froid et sous forme divisée est sous forme de pain. Au sens de l'invention, la composition de liant sous forme de pain est également appelée « pain de liant ».

On entend par pain de liant, un bloc de composition de liant selon l'invention ayant une masse comprise entre 0,5 g et 1000 kg, de préférence, entre 1 kg et 200 kg, plus préférentiellement entre 1 kg et 50 kg, encore plus préférentiellement entre 5 kg et 25 kg, encore plus préférentiellement entre 10 kg et 30 kg, ledit bloc étant avantageusement parallélépipédique, de préférence étant un pavé.

Le pain de liant a, de préférence, un volume compris entre 1000 $cm^3$ et 50000 $cm^3$, de préférence entre 5000 $cm^3$ et 25000 $cm^3$, plus préférentiellement entre 10000 $cm^3$ et 30000 $cm^3$, encore plus préférentiellement entre 14000

$cm^3$ et 25000 $cm^3$.

Lorsque le pain de liant est manipulé manuellement par une personne, la masse du pain de composition de liant peut varier de 0,5g à 20 kg, et de 20 à 50 kg dans le cas d'une manutention par deux personnes. Lorsque la manutention est réalisée par des équipements mécaniques, la masse du pain de liant peut varier de 50 à 1000 kg.

Le pain de liant est fabriqué à partir de la composition de liant additivée telle que décrite ci-dessus selon tout procédé connu industriellement, par exemple par extrusion, par moulage, ou selon le procédé de fabrication décrit dans le document US2011/0290695.

Le pain de liant est avantageusement emballé d'un film thermofusible selon tout procédé connu, de préférence par un film en polypropylène, polyéthylène ou un mélange de polyéthylène et polypropylène. La composition de liant conditionnée en pain de liant emballé d'un film thermofusible présente l'avantage d'être prêt à l'emploi c'est-à-dire qu'elle peut être directement chauffée dans le fondoir sans déballage préalable par exemple pour la fabrication d'émulsion ou éventuellement introduit directement dans l'unité d'enrobage de fabrication des enrobés. Le matériau thermofusible qui fond avec la composition de liant additivée n'affecte pas les propriétés de ladite composition de liant.

Le pain de liant selon l'invention peut également être recouvert de composé anti-agglomérant tel que défini ci-dessus et/ d'un agent colorant tel que défini ci-dessus et/ou d'une composition de revêtement telle que définie ci-dessus.

Dans cette variante, les préférences, les avantages, les différents modes de réalisation décrits pour les composés anti-agglomérant, les agents colorants, les compositions de revêtement s'appliquent également.

Le pain de liant peut également être conditionné dans un carton selon tout procédé connu.

En particulier, le pain de liant est conditionné dans un carton en faisant couler à chaud la composition de liant selon l'invention dans un carton dont la paroi de la face interne est siliconée puis refroidit, les dimensions du carton étant adaptées au poids et/ou volume du pain de liant souhaité.

Lorsque le pain de liant est emballé d'un film thermofusible ou est conditionné dans un carton, la demanderesse a démontré que la détérioration dudit film thermofusible ou dudit carton lors du transport et/ou du stockage et/ou de la manipulation à froid dudit pain de liant n'entrainait pas le fluage de la composition de liant. Par conséquent, les pains de liant conservent leur forme initiale et ne collent pas entre eux lors de leur transport et/ou stockage et/ou de la manipulation à froid malgré le fait que le film thermofusible ou le carton soit endommagé. L'absence de fluage de la composition de liant sous forme de pain lors de son transport et/ou stockage et/ou de sa manipulation à froid est due à la présence du mélange d'additifs chimiques (I) et (II) au sein de la composition de liant.

Granulats

La composition d'asphalte coulé est composée d'un liant et de charges minérales choisies parmi les granulats. Les charges minérales utilisées selon l'invention représentent par exemple 70 à 94,5%, 75 à 94%, 75 à 94,5%, 71 à 93,5 %, 85 à 94%, 86 à 93% en masse de la masse totale de la composition d'asphalte coulé. Les charges minérales selon l'invention sont choisies parmi les fines ou fillers, les sables et les gravillons. Les fines, les fillers, les sables et les gravillons sont des granulats répondant de préférence aux spécifications de la norme NF EN 13043. Un granulat peut être naturel, artificiel ou recyclé. Le granulat naturel est un granulat d'origine minérale n'ayant subi aucune transformation autre que mécanique. Le granulat artificiel est un granulat d'origine minérale résultant d'un procédé industriel comprenant des transformations thermiques ou autres. Les granulats sont généralement désignés en termes de dimensions inférieure (d) et supérieure (D) de 25 tamis, exprimées sous forme « d/D » correspondant à la classe granulaire. Cette désignation admet que des grains puissent être retenus sur le tamis supérieur (refus sur D) et que d'autres puissent passer au travers du tamis inférieur (passant à d). Les granulats sont des grains de dimensions comprises entre 0 et 125mm. Les fines comme les fillers sont une fraction granulaire d'un granulat qui passe au tamis de 0,063 mm. Le filler est un granulat dont la plupart des grains passe au tamis de 0,063 mm qui peut être ajouté aux matériaux de construction pour leur conférer certaines propriétés. Les sables sont des granulats 0/2 selon la norme NF EN 13043 pour les mélanges bitumineux. Les gravillons sont des granulats pour lesquels d >2 mm et D <45 mm selon la norme NF EN 13043 pour les mélanges bitumineux et enduits.

Selon l'invention, les fines sont de toute nature minérale. Elles sont de préférence choisies parmi les fillers de type calcaire. La granulométrie des fines selon l'invention est de préférence inférieure à 63$\mu$m. Les fines représentent 20 à 40%, de préférence 20 à 35%, en masse de la masse totale de la composition d'asphalte coulé selon l'invention, notamment lorsqu'elles sont des fillers de type calcaire.

Selon l'invention, les sables sont de préférence choisis parmi les sables semi concassés ou roulés. La granulométrie des sables selon l'invention est de préférence comprise entre 63$\mu$m et 2mm. Les sables représentent avantageusement de 15 à 45%, de préférence 20 à 40%, en masse de la masse totale de la composition d'asphalte coulé selon l'invention.

Selon l'invention, les gravillons sont choisis parmi les gravillons de toute nature géologique de densité supérieure à 1,5. De préférence, la granulométrie des gravillons selon l'invention est comprise entre 2mm et 14mm. Les gravillons sont de préférence choisis parmi les granulométries 2/6, 4/6, 6/10, et 10/14. Les gravillons représentent avantageusement

de 20 à 55%, de préférence 25 à 45% en masse de la masse totale de la composition d'asphalte selon l'invention, notamment lorsqu'ils sont de granulométrie 2/6 et/ou 4/6 et/ou 6/10 et/ou 10/14.

Composition d'asphalte coulé

Le liant selon l'invention représente avantageusement de 5 à 20%, de préférence 5 à 10%, et mieux encore 6 à 9%, en masse de la masse totale de la composition d'asphalte coulé.

Les granulats ou charges minérales choisies parmi les fines ou fillers, les sables et les gravillons, représentent avantageusement de 80 à 95%, de préférence 90 à 95%, et mieux encore 91 à 94%, en masse de la masse totale de la composition d'asphalte coulé.

La composition d'asphalte coulé selon l'invention comprend de préférence, ou mieux est essentiellement constituée de :

- de 5 à 20% de la composition de liant telle que définie ci-dessus,
- de 15 à 40% de fines,
- de 15 à 45% de sable,
- de 10 à 45% de gravillons,
  les pourcentages étant exprimés en masse par rapport à la masse totale de la composition d'asphalte coulé.

La composition d'asphalte coulé selon l'invention comprend de préférence, ou mieux est essentiellement constituée de :

- de 5 à 10% de la composition de liant telle que définie ci-dessus,
- de 15 à 35% de fines,
- de 20 à 45% de sable,
- de 15 à 40% de gravillons,
  les pourcentages étant exprimés en masse par rapport à la masse totale de la composition d'asphalte coulé.

La composition d'asphalte coulé selon l'invention comprend de préférence, ou mieux est essentiellement constituée de :

- de 6 à 9% de la composition de liant telle que définie ci-dessus,
- de 20 à 30% de fines,
- de 30 à 45% de sable,
- de 15 à 30% de gravillons,
  les pourcentages étant exprimés en masse par rapport à la masse totale de la composition d'asphalte coulé.

Procédé de fabrication de la composition d'asphalte coulé

De façon avantageuse, le procédé de fabrication d'asphaltes coulés selon l'invention comprend au moins les étapes de :

- chauffage des granulats à une température allant de 100°C à 200°C, de préférence de 120°C à 180°C, encore plus avantageusement de 120°C à 160°C
- mélange des granulats avec la composition de liant, dans une cuve telle qu'un malaxeur ou un tambour malaxeur,
- pétrissage du mélange dans un malaxeur muni de pales,
- obtention d'une composition d'asphalte coulé.

Les différents composants de la composition d'asphalte coulé selon l'invention, en particulier le liant, et les granulats, sont mélangés selon les proportions définies dans la composition d'asphalte coulé de l'invention. Ils sont ensuite malaxés et pétris en continu afin de former un mélange homogène et de maintenir l'homogénéité du mélange jusqu'à son application. Ce malaxage et ce pétrissage se font à une température allant de 120°C à 200°C. La durée du malaxage est de quelques secondes à quelques minutes, la durée du malaxage est de 0,5 à 4 heures, avantageusement de 1,5 à 2,5 heures. Une fois coulé et refroidi, le mélange se durcit et constitue un revêtement d'asphalte utilisable comme voie de circulation. L'épaisseur du revêtement selon l'invention varie par exemple de 15 à 40 mm, et de préférence de 20 à 25mm. L'asphalte selon l'invention est coulé de manière traditionnelle, c'est-à-dire en indépendance ou en adhérence sur tout support conforme aux règles de l'art, avec ou sans interposition d'une grille de verre.

Avantageusement, le procédé de l'invention est mis en œuvre avec une composition de liant sous forme solide

à froid et divisée, comme par exemple sous forme de granules ou de pains de liant.

Selon cette variante, le procédé de l'invention présente l'avantage de pouvoir être mis en œuvre sans étape préalable de chauffage des granules ou des pains de liant solide.

Le procédé de fabrication d'asphaltes coulés selon l'invention ne requiert pas d'étape de chauffage des pains ou des granules de liant solide avant mélange avec les granulats car au contact des granulats chauds, le liant solide à température ambiante fond.

Le liant solide à température ambiante tel que décrit ci-dessus présente l'avantage de pouvoir être ajouté directement aux granulats chauds, sans avoir à être fondu préalablement au mélange avec les granulats chauds.

De préférence, l'étape de mélange des granulats et du liant est réalisée sous agitation, puis l'agitation est maintenue pendant au plus 5 minutes, de préférence au plus 1 minute pour permettre l'obtention d'un mélange homogène.

Revêtement

L'invention concerne également un revêtement d'une surface, notamment des voies de circulation, présentant des propriétés mécaniques améliorées, notamment une résistance à l'indentation améliorée, ce revêtement étant obtenu à partir d'une composition d'asphalte coulé selon l'invention.

Parmi les surfaces concernées, on peut mentionner : des chaussées, des sols de parkings ; des voies de circulation pour piétons, telles que des trottoirs ou des terrasses ; des aménagements urbains, tels que des pistes de skateboards ; des sols d'équipements sportifs ou de sites industriels. Les asphaltes coulés de l'invention peuvent également être utilisés dans la réalisation d'étanchéité de bâtiments ou d'ouvrages de génie civil ; pour des applications techniques spéciales telles que mastics d'enrochement, sols de chambres froides, asphaltes anti-acide intérieurs et extérieurs.

Figure 1 : représentation graphique de la complaisance en fluage irréversible divisée par la contrainte (en ordonnée en $kPa^{-1}$) des compositions de liants bitumineux C9, C10, C11 et C12 après un cycle de fluage-recouvrance en fonction de la contrainte (en abscisse en Pa)

Légende :

● = C9; ■ = C10; ▲ = C11 ; X=C12

Figure 2 : représentation graphique du module Complexe G* (en ordonnée en Pa) des compositions C9, C10, C11 et C12, mesuré à 60°C et à une fréquence comprise entre 0,1 et 100 Hz (en abscisse, la fréquence angulaire exprimée en rad/s)

Légende :

● = C9; ■ = C10; ▲ = C11 ;X = C12

Figure 3 : représentation graphique du module Complexe G* (en ordonnée en Pa) des compositions C9, C10, C11 et C12, mesuré à 15°C et à une fréquence comprise entre 0,1 et 100 Hz (en abscisse, la fréquence angulaire exprimée en rad/s)

Légende :

● = C9; ■ = C10; ▲ = C11 ; X=C12

**Partie expérimentale :**

Matériel et méthodes

Les propriétés des bitumes sont mesurées au moyen des méthodes décrites ci-dessous :

- Pénétrabilité à l'aiguille à 25°C (P25) : unité = 1/10mm, norme EN 1426.
- Température de ramollissement bille et anneaux (TBA) : unité = °C, norme EN1427.

- Viscosité dynamique (V Dyn) : NF EN 13702, mesurée aux températures de 100°C, 110°C, 120°C, 130°C, 140°C, 160°C, 180°C, 200°C
- Résistance sous charge suivant la norme NFT66 002 : analyseur de texture de modèle TAXT2 de la société AMETK à 35°C V = 1mm/mn sur 10 mm d'enfoncement On évalue la force maximale et la force à 10 mm en Newtons (N).

On évalue la résistance à la force maximale et à 10 mm en Newtons par millimètres (N/mm).

- Module Complexe G* de la composition de mastic bitumineux mesuré à 15°C et à 60°C et à une fréquence comprise entre 0,1 et 100 Hz : unité = MPa ou Pa, norme EN 14770. L'essai a été réalisé à l'aide d'un rhéomètre à cisaillement oscillatoire (Modèle : Anton Paar). Les résultats sont rapportés en fonction de la fréquence angulaire exprimée en rad/s.

- Mesure de fluage recouvrance sous contraintes répétées (MSCRT ou Multiple Stress Creep and Recovery Test en anglais) mesuré selon la norme NF EN 16659. L'essai a été réalisé à l'aide d'un rhéomètre à cisaillement dynamique DSR en mode fluage à une température de 60°C. On a mesuré la complaisance en fluage irréversible, soit la déformation résiduelle d'une éprouvette après un cycle de fluage-recouvrance divisée par la contrainte appliquée.

Matières premières :

**Base Bitume (B)** : on a utilisé plusieurs bases bitume dont les caractéristiques sont présentées ci-dessous :

- Une base bitume de grade 35/50, notée **$B_1$**, ayant une pénétrabilité $P_{25}$ de 41 1/10 mm et une TBA de 52°C et disponible commercialement auprès du groupe TOTAL sous la marque AZALT®
- Une base bitume de grade 50/70, notée **$B_2$,** ayant une pénétrabilité $P_{25}$ de 58 1/10 mm et une TBA de 49,6°C et disponible commercialement auprès du groupe TOTAL sous la marque AZALT®
- Une base bitume de grade 35/50, notée **$B_3$,** ayant une pénétrabilité $P_{25}$ de 37 1/10 mm et une TBA de 52°C et disponible commercialement auprès du groupe TOTAL sous la marque AZALT®

**Additifs** :

- Additif A1 de formule (I) : acide sébacique
- Additif A2 de formule (II) : N,N'-éthylènedi(stéaramide) commercialisé par la société Croda sous le nom Crodawax 140 ®

Compositions :

On introduit la base bitume (**$B_1$**, **$B_2$** ou **$B_3$**) dans un réacteur maintenu à 160°C sous agitation à 300 tours/min pendant deux heures. On introduit ensuite dans le réacteur le ou les additifs. Le contenu du réacteur est maintenu à 160°C sous agitation à 300 tours/min pendant 1 heure.

On prépare les compositions C2 à C8 en mettant en contact la base bitume avec les additifs, suivant les tableaux 1 et 2 ci-dessous. Les quantités sont exprimées en pourcentage en masse de composé additif par rapport à la masse totale de la composition. Les compositions C1 à C3 et C9 à C11 sont comparatives, les compositions C4 à C8 et C12 sont selon l'invention.

**Tableau 1 :** contenu des compositions C1 à C8

| | C1 | C2 | C3 | C4 | C5 | C6 | C7 | C8 |
|---|---|---|---|---|---|---|---|---|
| Base bitume | B1 | B1 | B1 | B1 | B1 | B1 | B1 | B2 |
| A1 | - | 1,5% | - | 1,5% | 1% | 1,5% | 0,5% | 1,5% |
| A2 | - | - | 3,5% | 3,5% | 3% | 2,5% | 4% | 2,5% |

**Tableau 2 :** contenu des compositions C9 à C12

| | C9 | C10 | C11 | C12 |
|---|---|---|---|---|
| Base bitume | B3 | B3 | B3 | B3 |
| A1 | - | 1,5% | - | 1,5% |
| A2 | - | - | 2,5% | 2,5% |

Résultats :

Les résultats des mesures des propriétés des compositions de bitume sont exposés dans le tableau 3 ci-dessous

**Tableau 3** : Propriétés des compositions C1 à C8

| | C1 | C2 | C3 | C4 | C5 | C6 | C7 | C8 |
|---|---|---|---|---|---|---|---|---|
| P25 (1/10 mm) | 39 | 20 | 28 | 20 | 19 | 21 | 23 | 20 |
| TBA (°C) | 53 | 104 | 106 | 108 | 106 | 105 | 105 | 105,5 |
| V Dyn 120°C | 1,85 | 1,67 | 1,34 | 1,23 | - | 1,39 | 1,29 | - |
| V Dyn 130°C | 1,02 | 0,916 | 0,769 | 0,7 | - | 0,79 | 0,736 | - |
| V Dyn 140°C | 0,602 | 0,532 | 0,46 | 0,421 | - | 0,475 | 0,445 | - |
| V Dyn 160°C | 0,251 | 0,212 | 0,198 | 0,183 | - | 0,2 | 0,189 | - |
| V Dyn 180°C | 0,119 | 0,101 | 0,102 | 0,091 | - | 0,095 | 0,093 | - |
| V Dyn 200°C | 0,063 | 0,061 | 0,058 | 0,052 | - | 0,058 | 0,050 | - |
| Force Max à 35°C | 3,2 | 34,3 | 12,4 | 102 | 92 | 101 | 57,5 | - |
| Force à 10 mm à 35°C | 3,2 | 32 | 12,4 | 100 | 90 | 101 | 57,5 | - |
| Résistance à la force Max à 35°C | 9 | 233 | 66 | 568 | 475 | 566 | 388 | - |
| Résistance à 10 mm à 35°C | 9 | 260 | 66 | 790 | 727 | 855 | 424 | - |
| Force Max à 50°C | - | - | - | - | - | 41 | - | 38 |
| Résistance à la force Max à 50°C | - | - | - | - | - | 98 | - | 53 |
| Résistance à 10 mm à 50°C | - | - | - | - | - | 337 | - | 302 |

On constate que les compositions C4, C5, C6, C7 et C8 présentent, à température ambiante, des propriétés mécaniques très significativement supérieures à celles des compositions comparatives C1 à C3, sans que leur viscosité à chaud soit dégradée (augmentée).

**Tableau 4 :** Propriétés des compositions C9 à C12

| | C9 | C10 | C11 | C12 |
|---|---|---|---|---|
| P25 (1/10 mm) | 37 | 26 | 33 | 20 |
| TBA (°C) | 52 | 103 | 93 | 102 |
| V Dyn 140°C | 0,747 | 0,468 | 0,428 | 0,349 |
| V Dyn 160°C | 0,253 | 0,192 | 0,179 | 0,159 |
| V Dyn 180°C | 0,113 | 0,091 | 0,086 | 0,079 |

On constate que la composition C12, selon l'invention, présente une viscosité à chaud plus faible que celles des compositions comparatives C9 à C11.

• **Module Complexe G***

Il a été démontré que la composition C12 selon l'invention présentent un module complexe G* supérieur au module complexe des compositions comparatives C9 à C11 quelle que soit la fréquence à laquelle est mesuré le module complexe G* sur la plage de températures d'usage comprise entre 15 et 60°C.
Le module complexe G* traduit notamment la résistance mécanique des compositions, il est donc démontré que la composition C12 selon l'invention présente une meilleure résistance mécanique par rapport aux compositions comparatives.

• **Mesure de fluage recouvrance sous contraintes répétées (MSCRT)**

Il a été démontré que la composition C12 selon l'invention présente une complaisance de fluage irréversible (Jnr) inférieure à la complaisance de fluage irréversible des compositions comparatives C9 à C11 quelle que soit la contrainte de cisaillement cumulée à laquelle est mesurée la complaisance de fluage irréversible à une température d'usage de 60°C.
La complaisance de fluage irréversible traduit notamment la résistance de la composition à la déformation permanente, il est donc démontré que la composition C12 selon l'invention présente une meilleure résistance à la déformation permanente par rapport aux compositions comparatives C9 à C11.
De ce fait, les compositions selon l'invention présentent des propriétés mécaniques supérieures à celles des compositions comparatives sans que leur viscosité à chaud soit dégradée (augmentée)
Dès lors, les liants selon l'invention sont tout à fait adaptés à leurs utilisations en tant que liants pour la fabrication d'asphaltes coulés de par une viscosité au moins conservée à des températures comprises entre 160°C et 200°C ainsi que des propriétés mécaniques supérieures par rapport aux compositions de liants comparatives.

## Revendications

**1.** Utilisation d'une composition comprenant au moins :

• Une base de liant choisie parmi :

◦ une base bitume,
◦ une base de brai,
◦ un liant clair, ou
◦ un mélange d'une ou plusieurs de ces bases de liant,

• Un composé acide de formule générale (I) :

$$R\text{-}(COOH)_z \qquad (I)$$

dans laquelle R représente une chaîne linéaire ou ramifiée, saturée ou insaturée comprenant de 4 à 68 atomes de carbone et z est un entier variant de 2 à 4,
• Un composé amide de formule générale (II) :

$$R'\text{-}(NH)_nCONH\text{-}(X)_m\text{-}(NHCO)_p(NH)_n\text{-}R'' \qquad (II)$$

dans laquelle,

- les groupements R' et R'', identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S, et R'' peut être H ;
- le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S ;
- n et m et p sont des entiers ayant une valeur de 0 ou 1 indépendamment les uns des autres, et

les composés (I) et (II) sont présents en un ratio massique allant de 10 :1 à 1 :16, pour préparer une

composition d’asphalte coulé.

**2.** Composition d’asphalte coulé comprenant :

(i) 5 à 20 % d’une composition comprenant au moins :

• Une base de liant choisie parmi :

◦ une base bitume,
◦ une base de brai,
◦ un liant clair, ou
◦ un mélange d’une ou plusieurs de ces bases de liant,

• Un composé acide de formule générale (I) :

$$R\text{-}(COOH)_z \qquad (I)$$

dans laquelle R représente une chaîne linéaire ou ramifiée, saturée ou insaturée comprenant de 4 à 68 atomes de carbone et z est un entier variant de 2 à 4,
• Un composé amide de formule générale (II) :

$$R'\text{-}(NH)_nCONH\text{-}(X)_m\text{-}(NHCO)_p(NH)_n\text{-}R'' \qquad (II)$$

dans laquelle,

- les groupements R’ et R", identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S, et R" peut être H ;
- le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S ;
- n et m et p sont des entiers ayant une valeur de 0 ou 1 indépendamment les uns des autres, et
les composés (I) et (II) sont présents en un ratio massique allant de 10 :1 à 1 :16, et

(ii) de 15 à 40% de fines,
(iii) de 15 à 45% de sable,
(iv) de 10 à 45% de gravillons,
les pourcentages étant exprimés en masse par rapport à la masse totale de la composition.

**3.** Composition d’asphalte coulé selon la revendication 2, dans laquelle les composés (I) et (II) sont présents en un ratio massique allant de 5 :1 à 1 :9.

**4.** Composition d’asphalte coulé selon l’une quelconque des revendications 2 et 3, dans laquelle l’additif **(I)** est un diacide de formule générale $HOOC\text{-}C_wH_{2w}\text{-}COOH$ dans laquelle w est un entier variant de 4 à 22.

**5.** Composition d’asphalte coulé selon l’une quelconque des revendications 2 à 4, dans laquelle l’additif **(I)** est l’acide sébacique.

**6.** Composition d’asphalte coulé selon l’une quelconque des revendications 2 à 5, qui comprend de 0,1% à 5% en masse de l’additif **(I)** par rapport à la masse totale de la composition de liant.

**7.** Composition d’asphalte coulé selon l’une quelconque des revendications 2 à 6, qui comprend de 0,1% à 5% en masse de l’additif (**II**) par rapport à la masse totale de la composition de liant.

**8.** Composition d’asphalte coulé selon l’une quelconque des revendications 2 à 7, dans laquelle l’additif (II) est choisi

parmi ceux de formule (IIA) :

$$R'\text{-CONH-}(X)_m\text{-NHCO-}R'' \qquad \text{(IIA)}$$

dans laquelle,

- les groupements R' et R", identiques ou différents, représentent une chaîne hydrocarbonée saturée ou insaturée, linéaire, ramifiée ou cyclique, comprenant de 1 à 22 atomes de carbone, et comprenant éventuellement des hétéroatomes, tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S;
- le groupement X représente une chaîne hydrocarbonée, saturée ou insaturée, linéaire, cyclique ou ramifiée, comprenant de 1 à 22 atomes de carbone, éventuellement substituée, et comprenant éventuellement des hétéroatomes, tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S ;
- m est un entier ayant une valeur de 0 ou 1.

**9.** Composition d'asphalte coulé selon l'une quelconque des revendications 2 à 7, dans laquelle l'additif (II) est choisi parmi ceux de formule (IIB) :

$$R'\text{-CONH-}R'' \qquad \text{(IIB)}$$

dans laquelle,

- les groupements R' et R", identiques ou différents, représentent une chaîne hydrocarbonée saturée ou insaturée, linéaire, ramifiée ou cyclique, comprenant de 1 à 22 atomes de carbone, et comprenant éventuellement des hétéroatomes tels que N, O, S, des cycles hydrocarbonés en $C_5$-$C_{24}$ et/ou des hétérocycles hydrocarbonés en $C_4$-$C_{24}$ comprenant un ou plusieurs hétéroatomes tels que N, O, S.

**10.** Composition d'asphalte coulé selon l'une quelconque des revendications 2 à 9, dans laquelle le composé de formule générale (II) est choisi parmi

- les dérivés hydrazides tels que : $C_5H_{11}$-CONH-NHCO-$C_5H_{11}$, $C_9H_{19}$-CONH-NHCO-$C_9H_{19}$, $C_{11}H_{23}$-CONH-NHCO-$C_{11}H_{23}$, $C_{17}H_{35}$-CONH-NHCO-$C_{17}H_{35}$, ou $C_{21}H_{43}$-CONH-NHCO-$C_{21}H_{43}$ ;
- les diamides tels que le N,N'-éthylènedi(laurylamide) de formule $C_{11}H_{23}$-CONH-$CH_2$-$CH_2$-NHCO-$C_{11}H_{31}$, le N,N'-éthylènedi(myristylamide) de formule $C_{13}H_{27}$-CONH-$CH_2$-$CH_2$-NHCO-$C_{13}H_{27}$, le N,N'-éthylènedi(palmitamide) de formule $C_{15}H_{31}$-CONH-$CH_2$-$CH_2$-NHCO-$C_{15}H_{31}$, le N,N'-éthylènedi(stéaramide) de formule $C_{17}H_{35}$-CONH-$CH_2$-$CH_2$-NHCO-$C_{17}H_{35}$ ;

les monoamides tels que le laurylamide de formule $C_{11}H_{23}$-$CONH_2$, le myristylamide de formule $C_{13}H_{27}$-$CONH_2$, le palmitamide de formule $C_{15}H_{31}$-$CONH_2$, le stéaramide de formule $C_{17}H_{35}$-$CONH_2$.

**11.** Composition d'asphalte coulé selon l'une quelconque des revendications 2 à 10 comprenant :

- de 6 à 9 % d'une composition (i) ;
- de 20 à 30% de fines,
- de 30 à 45% de sable,
- de 15 à 30% de gravillons,

les pourcentages étant exprimés en masse par rapport à la masse totale de la composition.

**12.** Procédé de fabrication d'une composition d'asphalte coulé selon l'une quelconque des revendications 2 à 11 qui comprend au moins les étapes de :

- chauffage des granulats à une température allant de 100°C à 180°C, de préférence de 120°C à 160°C,
- mélange des granulats avec la composition de liant,
- pétrissage du mélange,
- obtention d'une composition d'asphalte coulé.

**13.** Procédé selon la revendication 12, dans lequel la composition de liant est mise en œuvre sous forme solide à froid et divisée.

**14.** Procédé selon la revendication 13, qui ne comporte pas d'étape de chauffage de la composition de liant avant son mélange avec les granulats.

**15.** Revêtement d'une surface, ce revêtement étant obtenu par un procédé comprenant la préparation d'une composition d'asphalte coulé selon l'une quelconque des revendications 2 à 11, son application et son étalement sur ladite surface.

## Patentansprüche

**1.** Verwendung einer Zusammensetzung, die mindestens Folgendes umfasst:

- eine Bindemittelbasis, ausgewählt aus:
  - ◦ einer Bitumenbasis,
  - ◦ einer Pechbasis,
  - ◦ einem hellen Bindemittel oder
  - ◦ einer Mischung aus einer oder mehreren dieser Bindemittelbasen,
- eine Säureverbindung mit der allgemeinen Formel (I):

$$R\text{-}(COOH)z \qquad (I),$$

worin R eine unverzweigte oder verzweigte, gesättigte oder ungesättigte Kette mit 4 bis 68 Kohlenstoffatomen darstellt und z eine ganze Zahl zwischen 2 und 4 ist,

- eine Amidverbindung mit der allgemeinen Formel (II):

$$R'\text{-}(NH)_nCONH\text{-}(X)_m\text{-}(NHCO)_p(NH)_n\text{-}R'' \qquad (II),$$

worin

- die Gruppe R' und R", identisch oder unterschiedlich, eine gesättigte oder ungesättigte, unverzweigte, verzweigte oder cyclische Kohlenwasserstoffkette mit 1 bis 22 Kohlenstoffatomen und mit gegebenenfalls Heteroatomen wie N, O, S, cyclische $C_5$-$C_{24}$-Kohlenwasserstoffe und/oder heterocyclische $C_4$-$C_{24}$-Kohlenwasserstoffe mit einem oder mehreren Heteroatomen wie N, O, S darstellen, und R" H sein kann;
- die Gruppe X eine gegebenenfalls substituierte, gesättigte oder ungesättigte, unverzweigte, cyclische oder verzweigte Kohlenwasserstoffkette mit 1 bis 22 Kohlenstoffatomen und mit gegebenenfalls Heteroatomen wie N, O, S, cyclische $C_5$-$C_{24}$-Kohlenwasserstoffe und/oder heterocyclische $C_4$-$C_{24}$-Kohlenwasserstoffe mit einem oder mehreren Heteroatomen wie N, O, S darstellt;
- n und m und p unabhängig voneinander ganze Zahlen mit einem Wert von 0 oder 1 sind, und

die Verbindungen (I) und (II) in einem Gewichtsverhältnis von 10:1 bis 1:16 vorliegen, zur Herstellung einer Gussasphaltzusammensetzung.

**2.** Gussasphaltzusammensetzung, umfassend:

(i) 5 bis 20 % einer Zusammensetzung, die mindestens Folgendes umfasst:

- eine Bindemittelbasis, ausgewählt aus:
  - ◦ einer Bitumenbasis,
  - ◦ einer Pechbasis,
  - ◦ einem hellen Bindemittel oder
  - ◦ einer Mischung aus einer oder mehreren dieser Bindemittelbasen,
- eine Säureverbindung mit der allgemeinen Formel (I):

$$R\text{-}(COOH)z \qquad (I),$$

worin R eine unverzweigte oder verzweigte, gesättigte oder ungesättigte Kette mit 4 bis 68 Kohlenstoffatomen darstellt und z eine ganze Zahl zwischen 2 und 4 ist,
• eine Amidverbindung mit der allgemeinen Formel (II):

$$R'\text{-}(NH)_nCONH\text{-}(X)_m\text{-}(NHCO)_p(NH)_n\text{-}R'' \qquad (II),$$

worin

- die Gruppe R' und R", identisch oder unterschiedlich, eine gesättigte oder ungesättigte, unverzweigte, verzweigte oder cyclische Kohlenwasserstoffkette mit 1 bis 22 Kohlenstoffatomen und mit gegebenenfalls Heteroatomen wie N, O, S, cyclische $C_5$-$C_{24}$-Kohlenwasserstoffen und/oder heterocyclische $C_4$-$C_{24}$-Kohlenwasserstoffen mit einem oder mehreren Heteroatomen wie N, O, S darstellen, und R" H sein kann;
- die Gruppe X eine gegebenenfalls substituierte, gesättigte oder ungesättigte, unverzweigte, cyclische oder verzweigte Kohlenwasserstoffkette mit 1 bis 22 Kohlenstoffatomen und mit gegebenenfalls Heteroatomen wie N, O, S, cyclische $C_5$-$C_{24}$-Kohlenwasserstoffen und/oder heterocyclische $C_4$-$C_{24}$-Kohlenwasserstoffen mit einem oder mehreren Heteroatomen wie N, O, S darstellt;
- n und m und p unabhängig voneinander ganze Zahlen mit einem Wert von 0 oder 1 sind, und
die Verbindungen (I) und (II) in einem Gewichtsverhältnis von 10:1 bis 1:16 vorliegen, und

(ii) 15 bis 40% Füller,
(ii) 15 bis 45% Sand,
(ii) 10 bis 45% Splitt,
wobei die Prozentangaben als Gewichtsprozent bezogen auf das Gesamtgewicht der Zusammensetzung angegeben sind.

**3.** Gussasphaltzusammensetzung nach Anspruch 2, wobei die Verbindungen (I) und (II) in einem Gewichtsverhältnis von 5:1 bis 1:9 vorliegen.

**4.** Gussasphaltzusammensetzung nach Anspruch 2 oder 3, wobei der Zusatzstoff (I) eine zweiwertige Säure mit der allgemeinen Formel $HOOC\text{-}C_wH_{2w}\text{-}COOH$ ist, in der w eine ganze Zahl zwischen 4 und 22 ist.

**5.** Gussasphaltzusammensetzung nach einem der Ansprüche 2 bis 4, wobei der Zusatzstoff (I) Sebacinsäure ist.

**6.** Gussasphaltzusammensetzung nach einem der Ansprüche 2 bis 5, die bezogen auf das Gesamtgewicht der Bindemittelzusammensetzung 0,1 Gew.-% bis 5 Gew.-% des Zusatzstoffs (I) umfasst.

**7.** Gussasphaltzusammensetzung nach einem der Ansprüche 2 bis 6, die bezogen auf das Gesamtgewicht der Bindemittelzusammensetzung 0,1 Gew.-% bis 5 Gew.-% des Zusatzstoffs (II) umfasst.

**8.** Gussasphaltzusammensetzung nach einem der Ansprüche 2 bis 7, wobei der Zusatzstoff (II) aus denen mit der Formel (IIA) ausgewählt ist:

$$R'\text{-CONH-}(X)m\text{-NHCO-}R'' \qquad (IIA),$$

worin

- die Gruppe R' und R", identisch oder unterschiedlich, eine gesättigte oder ungesättigte, unverzweigte, verzweigte oder cyclische Kohlenwasserstoffkette mit 1 bis 22 Kohlenstoffatomen und mit gegebenenfalls Heteroatomen wie N, O, S, cyclische $C_5$-$C_{24}$-Kohlenwasserstoffe und/oder heterocyclische $C_4$-$C_{24}$-Kohlenwasserstoffe mit einem oder mehreren Heteroatomen wie N, O, S darstellen;
- die Gruppe X eine gegebenenfalls substituierte, gesättigte oder ungesättigte, unverzweigte, cyclische oder verzweigte Kohlenwasserstoffkette mit 1 bis 22 Kohlenstoffatomen und mit gegebenenfalls Heteroatomen wie N, O, S, cyclische $C_5$-$C_{24}$-Kohlenwasserstoffe und/oder heterocyclische $C_4$-$C_{24}$-Kohlenwasserstoffe mit einem oder mehreren Heteroatomen wie N, O, S darstellt;
- m eine ganze Zahl mit einem Wert von 0 oder 1 ist.

**9.** Gussasphaltzusammensetzung nach einem der Ansprüche 2 bis 7, wobei der Zusatzstoff (II) aus denen mit der Formel (IIB) ausgewählt ist:

R'-CONH-R" (IIB)

worin

- wobei die Gruppe R' und R", identisch oder unterschiedlich, eine gesättigte oder ungesättigte, unverzweigte, verzweigte oder cyclische Kohlenwasserstoffkette mit 1 bis 22 Kohlenstoffatomen und mit gegebenenfalls Heteroatomen wie N, O, S, cyclische $C_5$-$C_{24}$-Kohlenwasserstoffe und/oder heterocyclische $C_4$-$C_{24}$-Kohlenwasserstoffe mit einem oder mehreren Heteroatomen wie N, O, S darstellen.

**10.** Gussasphaltzusammensetzung nach einem der Ansprüche 2 bis 9, wobei die Verbindung mit der allgemeinen Formel (II) ausgewählt ist aus

- Hydrazidderivaten wie: $C_5H_{11}$-CONH-NHCO-$C_5H_{11}$, $C_9H_{19}$-CONH-NHCO-$C_9H_{19}$, $C_{11}H_{23}$-CONH-NHCO-$C_{11}H_{23}$, $C_{17}H_{35}$-CONH-NHCO-$C_{17}H_{35}$ oder $C_{21}H_{43}$-CONH-NHCO-$C_{21}H_{43}$;
- Diamiden wie N,N'-Ethylendi(laurylamid) mit der Formel $C_{11}H_{23}$-CONH-$CH_2$-$CH_2$-NHCO-$C_{11}H_{31}$, N,N'-Ethylendi(myristylamid) mit der Formel $C_{13}H_{27}$-CONH-$CH_2$-$CH_2$-NHCO-$C_{13}H_{27}$, N,N'-Ethylendi(palmitamid) mit der Formel $C_{15}H_{31}$-CONH-$CH_2$-$CH_2$-NHCO-$C_{15}H_{31}$, N,N'-Ethylendi(stearinsäureamid) mit der Formel $C_{17}H_{35}$-CONH-$CH_2$-$CH_2$-NHCO-$C_{17}H_{35}$;

Monoamiden wie Laurylamid mit der Formel $C_{11}H_{23}$-$CONH_2$, Myristylamid mit der Formel $C_{13}H_{27}$-$CONH_2$, Palmitamid mit der Formel $C_{15}H_{31}$-$CONH_2$, Stearinsäureamid mit der Formel $C_{17}H_{35}$-$CONH_2$.

**11.** Gussasphaltzusammensetzung nach einem der Ansprüche 2 bis 10, umfassend:

◦ 6 bis 9 % einer Zusammensetzung (i);
◦ 20 bis 30% Füller,
◦ 30 bis 45% Sand,
◦ 15 bis 30% Splitt,

wobei die Prozentangaben als Gewichtsprozent bezogen auf das Gesamtgewicht der Zusammensetzung angegeben sind.

**12.** Verfahren zur Herstellung einer Gussasphaltzusammensetzung nach einem der Ansprüche 2 bis 11, das mindestens folgende Schritte umfasst:

- Erwärmen der Körnungen auf eine Temperatur zwischen 100°C und 180°C, vorzugsweise zwischen 120°C und 160°C,
- Mischen der Körnungen mit der Bindemittelzusammensetzung,
- Kneten der Mischung,
- Erhalten einer Gussasphaltzusammensetzung.

**13.** Verfahren nach Anspruch 12, wobei die Bindemittelzusammensetzung kalt und zerteilt in fester Form verwendet wird.

**14.** Verfahren nach Anspruch 13, das keinen Schritt zum Erwärmen der Bindemittelzusammensetzung vor dem Mischen mit den Körnungen umfasst.

**15.** Beschichtung einer Fläche, wobei diese Beschichtung durch ein Verfahren erhalten wird, das die Herstellung einer Gussasphaltzusammensetzung nach einem der Ansprüche 2 bis 11, das Aufbringen und Verteilen derselben auf der Fläche umfasst.

## Claims

**1.** Use of a composition comprising at least:

• A binder base chosen from:

° a bitumen base,
° a pitch base,

° a clear binder, or
° a mixture of one or more of these binder bases,

• An acid compound of general formula (I):

$$R\text{-}(COOH)z \qquad (I)$$

wherein R represents a linear or branched, saturated or unsaturated chain comprising from 4 to 68 carbon atoms and z is an integer ranging from 2 to 4,
• An amide compound of general formula (II):

$$R'\text{-}(NH)_nCONH\text{-}(X)_m\text{-}(NHCO)_p(NH)_n\text{-}R'' \qquad (II)$$

wherein:

- the R' and R" groups, which may be identical or different, represent a saturated or unsaturated and linear, branched or cyclic hydrocarbon-based chain comprising from 1 to 22 carbon atoms which optionally comprises heteroatoms, such as N, O or S, $C_5$-$C_{24}$ hydrocarbon-based rings and/or $C_4$-$C_{24}$ hydrocarbon-based heterocycles comprising one or more heteroatoms, such as N, O or S, and R" may be H;
- the X group represents a saturated or unsaturated and linear, cyclic or branched hydrocarbon-based chain comprising from 1 to 22 carbon atoms which is optionally substituted and which optionally comprises heteroatoms, such as N, O or S, $C_5$-$C_{24}$ hydrocarbon-based rings and/or $C_4$-$C_{24}$ hydrocarbon-based heterocycles comprising one or more heteroatoms, such as N, O or S;
- n, m and p are integers having a value of 0 or 1, independently of one another, and

the compounds (I) and (II) are present in a weight ratio ranging from 10:1 to 1:16, for preparing a mastic asphalt composition.

**2.** Mastic asphalt composition comprising:

(i) 5% to 20% of a composition comprising at least:

• A binder base chosen from:

◦ a bitumen base,
◦ a pitch base,
◦ a clear binder, or
◦ a mixture of one or more of these binder bases,

• An acid compound of general formula (I):

$$R\text{-}(COOH)z \qquad (I)$$

wherein R represents a linear or branched, saturated or unsaturated chain comprising from 4 to 68 carbon atoms and z is an integer ranging from 2 to 4,
• An amide compound of general formula (II):

$$R'\text{-}(NH)_nCONH\text{-}(X)_m\text{-}(NHCO)_p(NH)_n\text{-}R'' \qquad (II)$$

wherein:

- the R' and R" groups, which may be identical or different, represent a saturated or unsaturated and linear, branched or cyclic hydrocarbon-based chain comprising from 1 to 22 carbon atoms which optionally comprises heteroatoms, such as N, O or S, $C_5$-$C_{24}$ hydrocarbon-based rings and/or $C_4$-$C_{24}$ hydrocarbon-based heterocycles comprising one or more heteroatoms, such as N, O or S, and R" may be H;
- the X group represents a saturated or unsaturated and linear, cyclic or branched hydrocarbon-based chain comprising from 1 to 22 carbon atoms which is optionally substituted and which optionally comprises heteroatoms, such as N, O or S, $C_5$-$C_{24}$ hydrocarbon-based rings and/or $C_4$-$C_{24}$ hydrocarbon-

based heterocycles comprising one or more heteroatoms, such as N, O or S;
- n, m and p are integers having a value of 0 or 1, independently of one another, and
the compounds (I) and (II) are present in a weight ratio ranging from 10:1 to 1:16, and

(ii) from 15% to 40% of fines,
(iii) from 15% to 45% of sand,
(iv) from 10% to 45% of stone chippings,
the percentages being expressed by weight relative to the total weight of the composition.

**3.** Mastic asphalt composition according to Claim 2, wherein the compounds (I) and (II) are present in a weight ratio ranging from 5:1 to 1:9.

**4.** Mastic asphalt composition according to either one of Claims 2 and 3, wherein the additive (I) is a diacid of general formula $HOOC-C_wH_{2w}-COOH$ wherein w is an integer ranging from 4 to 22.

**5.** Mastic asphalt composition according to any one of Claims 2 to 4, wherein the additive (I) is sebacic acid.

**6.** Mastic asphalt composition according to any one of Claims 2 to 5, which comprises from 0.1% to 5% by weight of the additive **(I)** relative to the total weight of the binder composition.

**7.** Mastic asphalt composition according to any one of Claims 2 to 6, which comprises from 0.1% to 5% by weight of the additive **(II)** relative to the total weight of the binder composition.

**8.** Mastic asphalt composition according to any one of Claims 2 to 7, wherein the additive (II) is chosen from those of formula (IIA):

R'-CONH-(X)m-NHCO-R" (IIA)

wherein:

- the R' and R" groups, which may be identical or different, represent a saturated or unsaturated and linear, branched or cyclic hydrocarbon-based chain comprising from 1 to 22 carbon atoms which optionally comprises heteroatoms, such as N, O or S, $C_5$-$C_{24}$ hydrocarbon-based rings and/or $C_4$-$C_{24}$ hydrocarbon-based heterocycles comprising one or more heteroatoms, such as N, O or S;
- the X group represents a saturated or unsaturated and linear, cyclic or branched hydrocarbon-based chain comprising from 1 to 22 carbon atoms which is optionally substituted and which optionally comprises heteroatoms, such as N, O or S, $C_5$-$C_{24}$ hydrocarbon-based rings and/or $C_4$-$C_{24}$ hydrocarbon-based heterocycles comprising one or more heteroatoms, such as N, O or S;
- m is an integer having a value of 0 or 1.

**9.** Mastic asphalt composition according to any one of Claims 2 to 7, wherein the additive (II) is chosen from those of formula (IIB):

R'-CONH-R" (IIB)

wherein:

- the R' and R" groups, which may be identical or different, represent a saturated or unsaturated and linear, branched or cyclic hydrocarbon-based chain comprising from 1 to 22 carbon atoms which optionally comprises heteroatoms, such as N, O or S, $C_5$-$C_{24}$ hydrocarbon-based rings and/or $C_4$-$C_{24}$ hydrocarbon-based heterocycles comprising one or more heteroatoms, such as N, O or S.

**10.** Mastic asphalt composition according to any one of Claims 2 to 9, wherein the compound of general formula (II) is chosen from:

- hydrazide derivatives such as: $C_5H_{11}$-CONH-NHCO-$C_5H_{11}$, $C_9H_{19}$-CONH-NHCO-$C_9H_{19}$, $C_{11}H_{23}$-CONH-NHCO-$C_{11}H_{23}$, $C_{17}H_{35}$-CONH-NHCO-$C_{17}H_{35}$, or $C_{21}H_{43}$-CONH-NHCO-$C_{21}H_{43}$;
- diamides such as N,N'-ethylenedi(laurylamide) of formula $C_{11}H_{23}$-CONH-$CH_2$-$CH_2$-NHCO-$C_{11}H_{31}$, N,N'-eth-

ylenedi(myristylamide) of formula $C_{13}H_{27}$-CONH-$CH_2$-$CH_2$-NHCO-$C_{13}H_{27}$, N,N'-ethylenedi(palmitamide) of formula $C_{15}H_{31}$-CONH-$CH_2$-$CH_2$-NHCO-$C_{15}H_{31}$, N,N'-ethylenedi(stearamide) of formula $C_{17}H_{35}$-CON H-$CH_2$-$CH_2$-NHCO-$C_{17}H_{35}$;
- monoamides such as laurylamide of formula $C_{11}H_{23}$-$CONH_2$, myristylamide of formula $C_{13}H_{27}$-$CONH_2$, palmitamide of formula $C_{15}H_{31}$-$CONH_2$, stearamide of formula $C_{17}H_{35}$-$CONH_2$.

**11.** Mastic asphalt composition according to any one of Claims 2 to 10, comprising:

• from 6% to 9% of a composition (i);
• from 20% to 30% of fines,
• from 30% to 45% of sand,
• from 15% to 30% of stone chippings,
the percentages being expressed by weight relative to the total weight of the composition.

**12.** Process for manufacturing a mastic asphalt composition according to any one of Claims 2 to 11, which comprises at least the steps of:

- heating the aggregates to a temperature ranging from 100°C to 180°C, preferably from 120°C to 160°C,
- mixing the aggregates with the binder composition,
- kneading the mixture,
- obtaining a mastic asphalt composition.

**13.** Process according to Claim 12, wherein the binder composition is used in a form that is solid under cold conditions and divided.

**14.** Process according to Claim 13, which does not comprise a step of heating the binder composition before it is mixed with the aggregates.

**15.** Surfacing of a surface, this surfacing being obtained by means of a process comprising the preparation of a mastic asphalt composition according to any one of Claims 2 to 11, the application thereof and the spreading thereof on said surface.

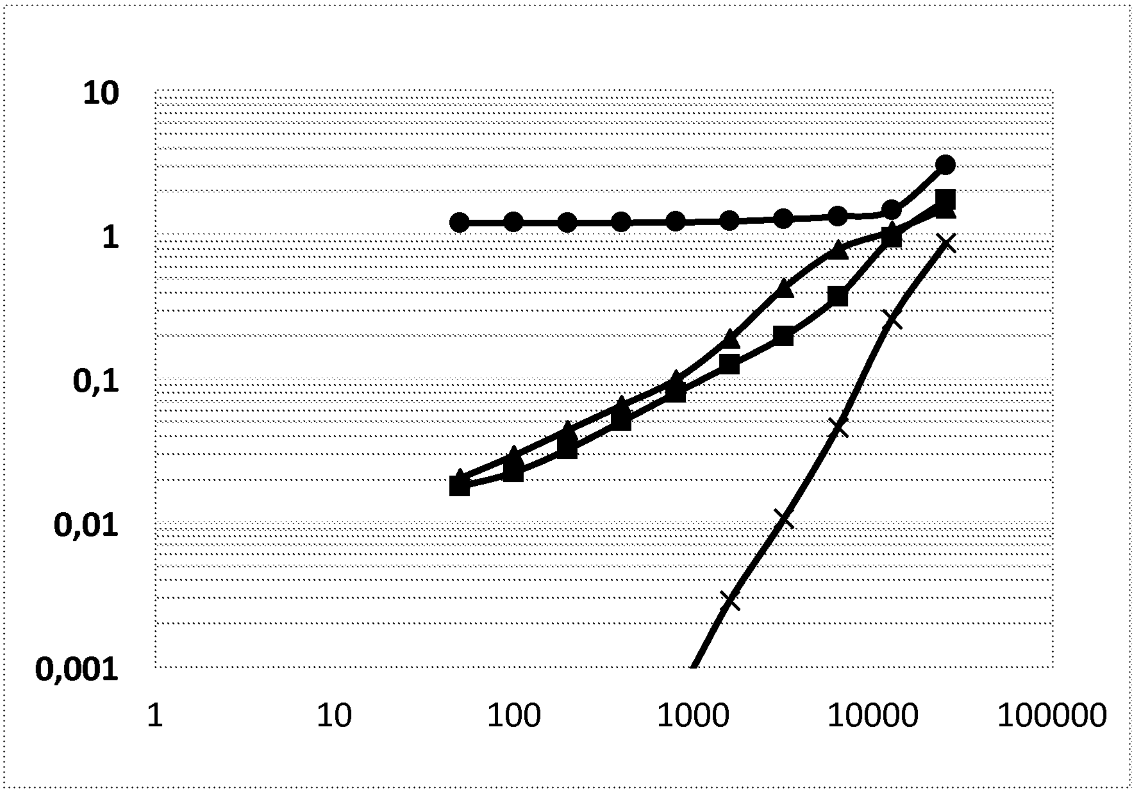


Figure 1

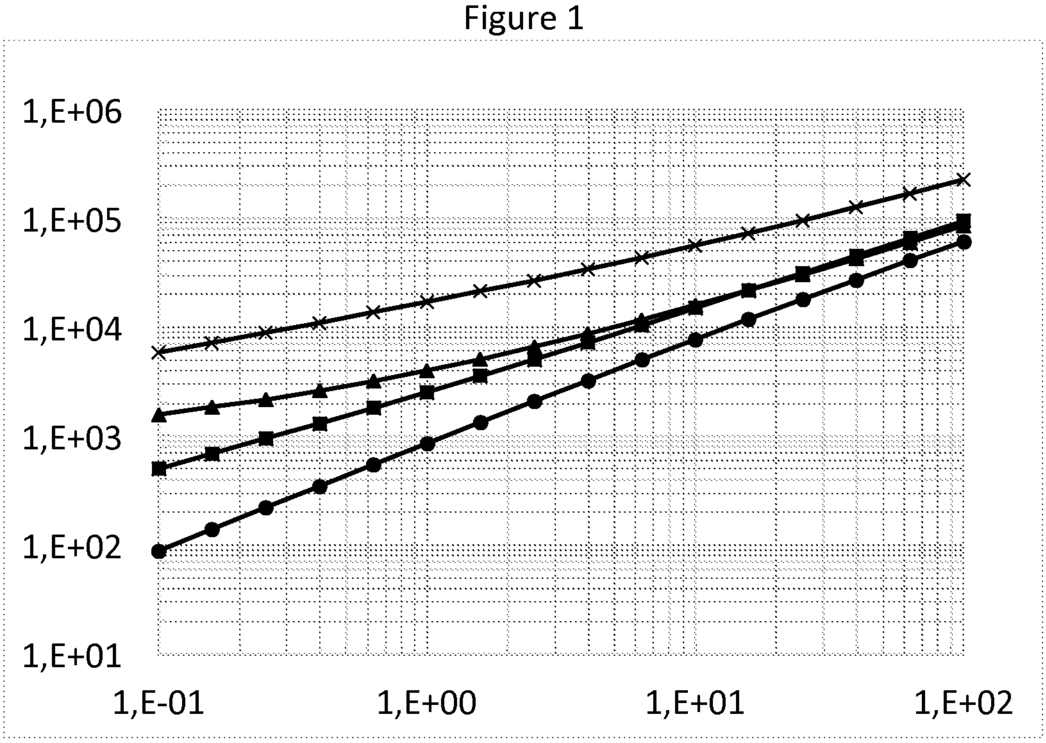


Figure 2

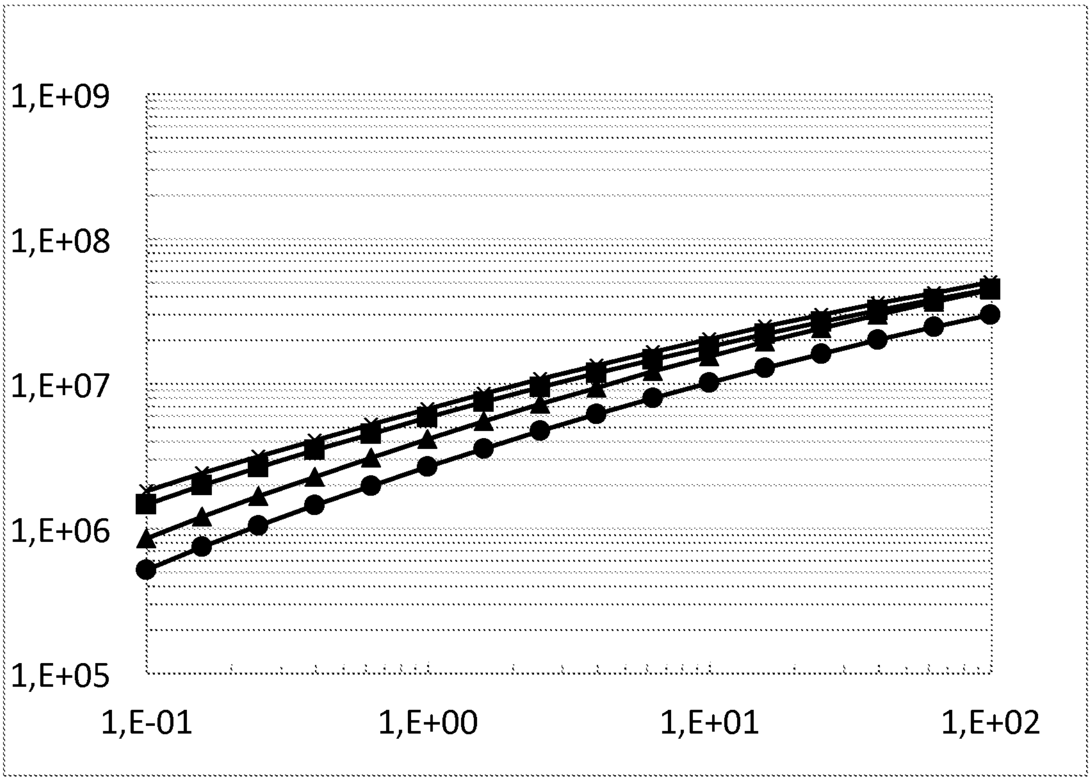


Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 2276811 A
- FR 2721936
- FR 2855523
- US 3026568 A
- WO 2009153324 A
- WO 2016016318 A
- WO 2015158889 A
- WO 2008107551 A
- FR 3024454
- CN 101585118
- WO 0153409 A
- EP 1783174 A
- EP 1473327 A
- WO 2009150519 A
- WO 2010055491 A
- FR 3014111
- US 20040069685 A
- US 4305812 A
- US 4455216 A
- WO 2007058994 A
- WO 2008137394 A
- WO 11013073 A
- WO 2004020532 A
- WO 2007128636 A
- WO 2009071467 A
- WO 2011000133 A
- WO 2008141932 A
- WO 2008141930 A
- WO 2008043635 A
- WO 2008022836 A
- WO 2009015969 A
- WO 2010028261 A
- US 4279579 A
- WO 2012168380 A
- US 20110290695 A


### Littérature non-brevet citée dans la description


- **LEE et al.** *Fuel Processing Technology,* 2014, vol. 119, 204-210
- *CHEMICAL ABSTRACTS,* 112 945-52-5
- **S. BRUNAUER ; PH EMMET ; I. TELLER.** *J. Am. Chemical Society,* 1938, vol. 60, 309